# EUROPEAN PATENT APPLICATION

(11) **EP 3 764 640 A1**
(43) Date of publication of application: **13.01.2021**
(21) Application number: 20184621.9
(22) Date of filing: 08.07.2020
(51) Int. Cl.: H04N 7/18, H04M 9/02, H04M 11/02

(54) **DOOR PHONE SYSTEM AND COMMUNICATION METHOD**

(30) Priority: 08.07.2019 JP 2019127069; 08.07.2019 JP 2019127066; 08.07.2019 JP 2019127059
(71) Applicant: Panasonic Intellectual Property Management Co., Ltd., Osaka-shi, Osaka 540-6207 (JP)
(72) Inventor: YAMAMOTO, Takashi, Osaka-shi, Osaka 540-6207 (JP); KANETADA, Naoto, Osaka-shi, Osaka 540-6207 (JP)
(74) Representative: Eisenführ Speiser

(57) **Abstract**

Lobby station 100 performs digital modulation on a digital data string of a downlink packet including digital video data and digital audio data, and transmits a downlink carrier with a modulation signal thereon within a first frequency band to indoor monitor 200. Indoor monitor 200 performs digital modulation on a digital data string of an uplink packet including digital audio data, and transmits an uplink carrier with a modulation signal thereon within a second frequency band lower than the first frequency band to lobby station 100. Thus, it is possible to implement bidirectional digital transmission without lowering a transmission rate in a system with a large delay in a communication path, and to achieve higher image quality and higher voice quality of the indoor monitor and higher output voice quality of the lobby station.

## Description

### Technical Field

The present disclosure relates to a door phone system and a communication method.

### Background Art

Door phone systems for detached houses are widespread each of which includes an entrance slave unit installed outside near an entrance of a house and a base unit inside the house. Generally, in the door phone systems, the entrance slave unit and the base unit are connected by a two-wire cable.

Demand for higher quality video is becoming stronger due to an increase in awareness of crime prevention and the like in recent years. For this reason, in the door phone systems for detached houses, a study for switching communication via the two-wire cable from an analog system to a digital system has been progressing. As a digital door phone system can transmit and receive large volumes of data, users can view high quality video. In addition, when switching to the digital system, a door phone system allowing the existing two-wire cable to be used as is has also been developed for low-cost and simple installation.

In recent years, door phone systems for multiple dwelling houses such as condominiums are also becoming widespread. Also in the door phone systems for multiple dwelling houses, systems in which apparatuses are connected by the two-wire cable are the mainstream.

In analog door phones for multiple dwelling houses, deterioration in video quality becomes noticeable due to signal deterioration by going through a plurality of distributors (repeaters) and signal deterioration caused by long wiring. Therefore, it is considered that, in the future, in the door phone systems for multiple dwelling houses, switching from the analog system to the digital system will be advanced in order to respond to demand for higher quality video and the like.

Patent Literature (hereinafter, referred to as PTL) 1 discloses a multiple-dwelling-house intercom system (door phone system for a multiple dwelling house) that includes: a collective entrance unit (lobby station) installed at a shared entrance of the multiple dwelling house; a dwelling base unit (indoor monitor) installed in each dwelling unit for a resident to respond to a call from the collective entrance unit; and a controller (distributor) connected with the collective entrance unit via a two-wire cable in a shared portion and also connected with the dwelling base unit via a two-wire cable for each dwelling unit. The system of PTL 1 achieves higher image quality and higher voice quality of the indoor monitor by a one-way digital transmission system from a side of the lobby station (camera) to a side of the indoor monitor.

### Citation List

### Patent Literature

PTL 1
Japanese Patent Application Laid-Open No. 2007-202047

### Summary of Invention

### Technical Problem

In a door phone system, a delay in a communication path becomes large in a case where a total wiring length becomes long, such as when the number of passes through repeaters is large or the like. In this case, when digital communication of time division duplex (TDD) is adopted, a data area of a communication packet (slot) becomes narrow since it is necessary to secure a margin of delay, that is, to lengthen a guard space for preventing delay interference. For this reason, a transmission rate becomes lower, communication efficiency is significantly reduced, and it is difficult to achieve higher image quality. Further, in a case where the number of repeaters is undetermined, it is difficult to determine a delay value so that a system construction is very severe.

Accordingly, in the related art such as PTL 1, the digital communication of time division duplex is not adopted, and analog voice is transmitted from the side of the indoor monitor to the side of the lobby station. Since analog transmission is susceptible to noise and/or the like, it is impossible to achieve higher output voice quality of the lobby station.

One non-limiting and exemplary embodiment of the present disclosure facilitates providing a door phone system and a communication method capable of implementing bidirectional digital transmission without lowering a transmission rate in a system with a large delay in a communication path, and achieving higher image quality and higher voice quality of an indoor monitor and higher output voice quality of a lobby station.

### Solution to Problem

A door phone system of the present disclosure includes: a lobby station; and an indoor monitor that communicates with the lobby station, wherein the lobby station performs digital modulation on a digital data string of a downlink packet including digital video data and digital audio data, and transmits a downlink carrier with a modulation signal thereon within a first frequency band to the indoor monitor, and the indoor monitor performs digital modulation on a digital data string of an uplink packet including digital audio data, and transmits an uplink carrier with a modulation signal thereon within a second frequency band lower than the first frequency band to the lobby station.

A communication method of the present disclosure is a communication method of a door phone system including; a lobby station; and an indoor monitor that communicates with the lobby station, the communication method including: performing, by the lobby station, digital modulation on a digital data string of a downlink packet including digital video data and digital audio data; transmitting, by the lobby station, a downlink carrier with a modulation signal thereon within a first frequency band to the indoor monitor; performing, by the indoor monitor, digital modulation on a digital data string of an uplink packet including digital audio data; and transmitting, by the indoor monitor, an uplink carrier with a modulation signal thereon within a second frequency band lower than the first frequency band to the lobby station.

The comprehensive or specific aspects may be implemented by a system, an integrated circuit, a computer program or a recording medium, or may be implemented by any combination of a system, an apparatus, a method, an integrated circuit, a computer program and a recording medium.

### Advantageous Effects of Invention

According to one aspect of the present disclosure, it is possible to implement bidirectional digital transmission without lowering a transmission rate even in a case where a delay in a communication path is large, and to achieve higher image quality and higher voice quality of an indoor monitor and higher output voice quality of a lobby station.

### Brief Description of Drawings

FIG. 1 is a system configuration diagram illustrating a configuration of a door phone system according to Embodiment 1 of the present disclosure;
FIG. 2A illustrates a frame format and a time slot format in a downlink direction according to Embodiment 1 of the present disclosure;
FIG. 2B illustrates a frame format and a time slot format in an uplink direction according to Embodiment 1 of the present disclosure;
FIG. 2C illustrates a format of a control data field according to Embodiment 1 of the present disclosure;
FIG. 3 is a block diagram illustrating a configuration of a lobby station according to Embodiment 1 of the present disclosure;
FIG. 4 illustrates one example of button arrangement of the lobby station according to Embodiment 1 of the present disclosure;
FIG. 5 is a block diagram illustrating a configuration of an indoor monitor according to Embodiment 1 of the present disclosure;
FIG. 6A illustrates frequency bands of respective signals transmitted and received by an analog lobby station;
FIG. 6B illustrates frequency bands of respective signals transmitted and received by the lobby station according to Embodiment 1 of the present disclosure;
FIG. 7 illustrates time difference of a prescribed number of frames due to difference in crystal oscillation frequency in Embodiment 1 of the present disclosure;
FIG. 8 is a block diagram illustrating an internal configuration of a communication clock generator of the lobby station in Embodiment 1 of the present disclosure;
FIG. 9 is a block diagram illustrating an internal configuration of a crystal oscillator of the lobby station in Embodiment 1 of the present disclosure;
FIG. 10 is a sequence diagram (a call with the indoor monitor by a lobby station callout) of the door phone system according to Embodiment 1 of the present disclosure;
FIG. 11 is a sequence diagram (monitoring of a lobby station image by indoor monitor activation) of the door phone system according to Embodiment 1 of the present disclosure;
FIG. 12 is a sequence diagram (simultaneous transmission by indoor monitor activation) of the door phone system according to Embodiment 1 of the present disclosure;
FIG. 13 is a block diagram illustrating a configuration of a lobby station according to Embodiment 2 of the present disclosure;
FIG. 14 is a block diagram illustrating a configuration of an indoor monitor according to Embodiment 2 of the present disclosure;
FIG. 15 is a block diagram illustrating a configuration of a lobby station according to Embodiment 3 of the present disclosure;
FIG. 16 is a block diagram illustrating a configuration of an indoor monitor according to Embodiment 3 of the present disclosure;
FIG. 17 is a sequence diagram (an extension call between indoor monitors) of a door phone system according to Embodiment 3 of the present disclosure;
FIG. 18 is a sequence diagram (a call with an indoor monitor by a lobby station callout during the extension call) of the door phone system according to Embodiment 3 of the present disclosure; and
FIG. 19 is a sequence diagram (monitoring of a lobby station image by indoor monitor activation) of the door phone system according to Embodiment 3 of the present disclosure.

### Description of Embodiments

Hereinafter, embodiments of the present disclosure will be described in detail using the accompanying drawings with reference to the drawings as appropriate. However, detailed description more than necessary may be omitted. For example, detailed description of already well-known matters and redundant description of substantially the same configuration may be omitted. This is to avoid unnecessary redundancy in the following description and facilitate understanding by those skilled in the art.

The accompanying drawings and following description are provided for those skilled in the art to fully understand the present disclosure, and are not intended to limit the subject matter described in the appended claims.

### (Embodiment 1)

### <Outline of System>

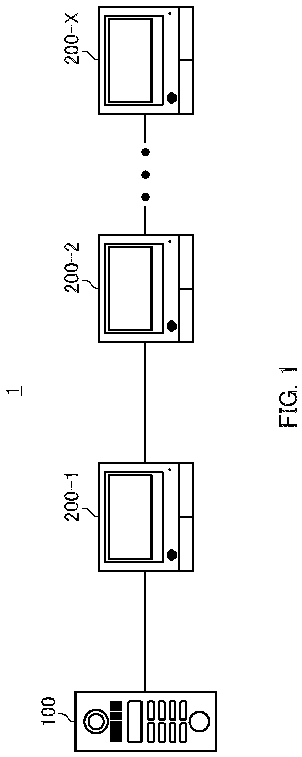

First, an outline of a door phone system of the present disclosure will be described with reference to FIG. 1. As illustrated in FIG. 1, door phone system 1 includes one lobby station 100, and a plurality of indoor monitors 200. Lobby station 100 is apparatus used mainly for a visitor to a multiple dwelling house to call a resident who is a visiting destination and is installed, for example, at a shared entrance (lobby) on the first floor of the building of the multiple dwelling house. Indoor monitor 200 is apparatus mainly for the resident to respond in response to the call from the visitor, and is installed in each room (or each dwelling unit). In addition, indoor monitor 200 also serves as apparatus to relay between lobby station 100 and other indoor monitors 200.

Lobby station 100 is connected with one indoor monitor 200-1 via a two-wire cable.

Indoor monitors 200 are connected with each other by daisy chain wiring via the two-wire cable. Specifically, indoor monitor 200-1 is connected with lobby station 100 in the preceding stage and indoor monitor 200-2 in the succeeding stage. Another indoor monitor 200-h (where "h" is an integer of two or more) is connected with indoor monitor 200-h-1 in the preceding stage and indoor monitor 200-h+1 in the succeeding stage.

Lobby station 100 transmits video data, audio data, and command data to indoor monitor 200 of a communication opposite party. Each indoor monitor 200 transmits audio data and command data to lobby station 100. Further, each indoor monitor 200 controls a camera of lobby station 100. Indoor monitor 200 located between lobby station 100 and indoor monitor 200 of the communication opposite party relays signals transmitted and received between lobby station 100 and indoor monitor 200 of the communication opposite party.

In the following description, a direction from lobby station 100 to indoor monitor 200 is referred to as a "downlink direction," and packets and signals transmitted in the downlink direction are referred to as "downlink packets" and "downlink signals" respectively. A direction from indoor monitor 200 to lobby station 100 is referred to as an "uplink direction," and packets and signals transmitted in the uplink direction are referred to as "uplink packets" and "uplink signals" respectively.

### <Frame Format and Time Slot Format>

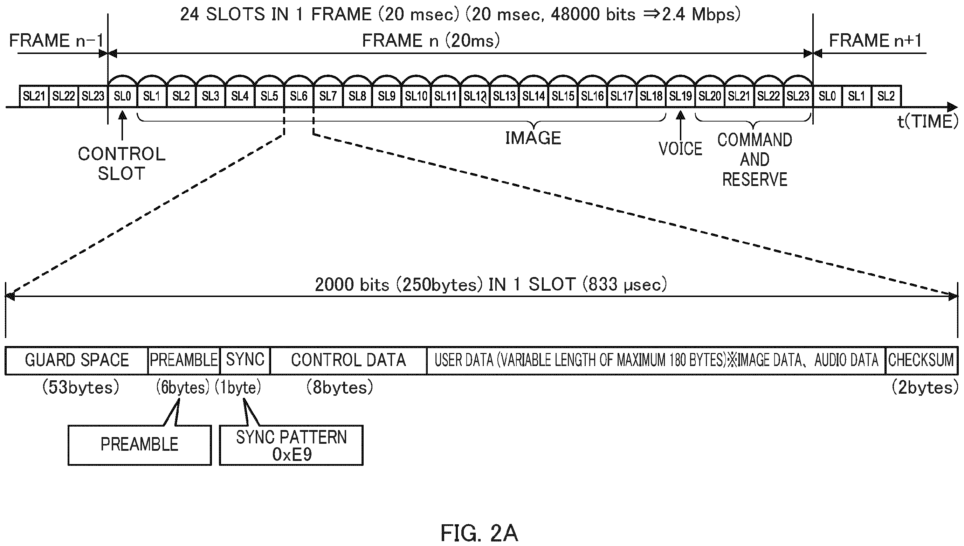

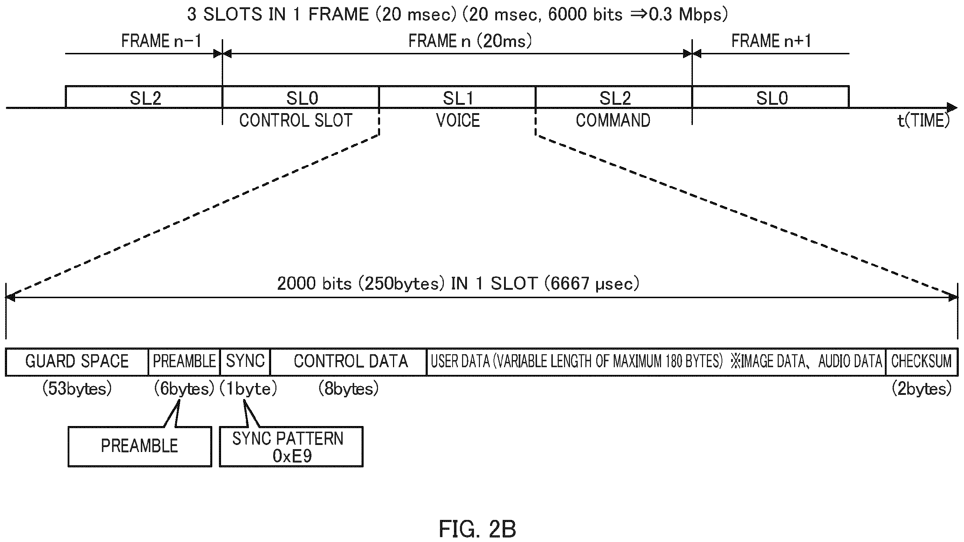

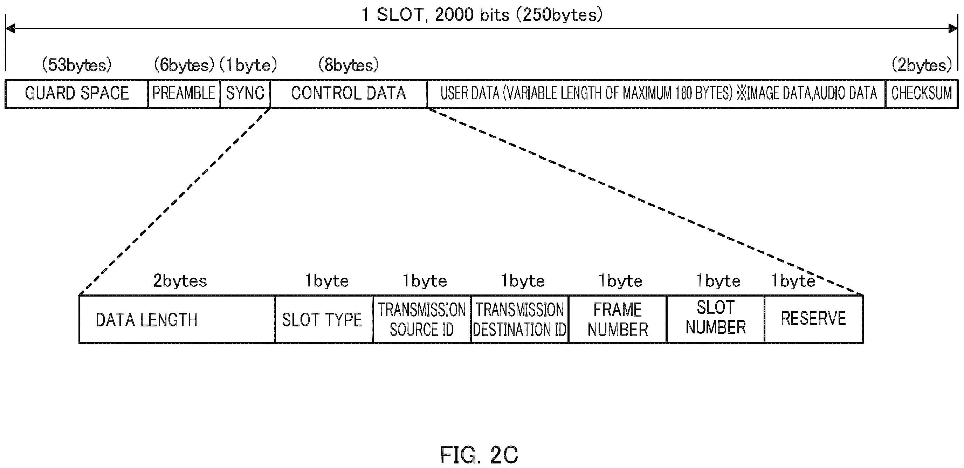

Next, a frame format and a time slot format according to the embodiment will be described with reference to FIGS. 2A, 2B, and 2C.

FIG. 2A illustrates a frame format and a time slot format in the downlink direction. As illustrated in FIG. 2A, in the downlink direction, each frame includes an area of 48,000 bits, a cycle of 20 ms, and a bit rate of 2.4 Mbps (high speed), and is divided into 24 time slots from "SL0" to "SL23". Therefore, each time slot in the downlink direction includes an area of 2,000 bits=250 bytes, a cycle of 0.833 µsec, and a bit rate of 2.4 Mbps.

"SL1" to "SL18" are time slots allocated for transmitting video data from lobby station 100. "SL19" is a time slot allocated for transmitting audio data from lobby station 100. Note that, "SL20" to "SL23" are reserve slots, and may be used as time slots for commands.

In a case where it is necessary to synchronize between lobby station 100 and indoor monitor 200 to transmit data, "SL0" may be used as a control slot (beacon).

Thus, in a case where data is transmitted from lobby station 100 to indoor monitor 200 in the downlink direction by using a communication frame composed of a plurality of time slots, video data, audio data, and command data can be allocated to respective slots and time-division multiplexed. Note that, in this case, the video data alone, or the video data and audio data, or further the video data, audio data and command data can also be transmitted.

In a case where data is transmitted in the "downlink direction" by using the communication frame composed of the plurality of time slots, at least one time slot may be allocated for the video data according to a system request such as the data amount. Similarly, in the case of transmitting the video data and audio data, at least one time slot may be allocated for the video data and at least one time slot may be allocated for the audio data.

FIG. 2B illustrates a frame format and a time slot format in the uplink direction. As illustrated in FIG. 2B, in the uplink direction, each frame includes an area of 6,000 bits, a cycle of 20 ms, and a bit rate of 0.3 Mbps (low speed), and is divided into 3 time slots from "SL0" to "SL2". Therefore, each time slot in the uplink direction includes an area of 2,000 bits=250 bytes, a cycle of 6.667 µsec, and a bit rate of 0.3 Mbps.

"SL1" is a time slot allocated for transmitting audio data from indoor monitor 200. Note that, "SL2" is a reserve slot, and may be used as a time slot for commands.

In a case where it is necessary to synchronize between lobby station 100 and indoor monitor 200 to transmit data, "SL0" may be used as a control slot (beacon).

Thus, in a case where data is transmitted from indoor monitor 200 to lobby station 100 in the "uplink direction" by using a communication frame composed of a plurality of time slots, audio data and command data can be allocated to respective slots and time-division multiplexed.

In addition, since the video data is not transmitted in the uplink direction, the bit rate of the time slot in the uplink direction can be lower than the bit rate of the time slot in the downlink direction. By varying the bit rates (communication rates) in the uplink and downlink directions, it is possible to set a frequency band of a carrier wave in the uplink direction (hereinafter, referred to as "uplink carrier") and a frequency band of a carrier wave in the downlink direction (hereinafter, referred to as "downlink carrier") as separable frequency bands in a case where digital modulation is performed by frequency shift keying (FSK) and the transmission is conducted in both the uplink and downlink directions, for example, thereby enabling digital communication by frequency division duplex (FDD).

Each time slot in the downlink and uplink directions is divided into a guard space of 53 bytes, a preamble field (Preamble) of 6 bytes, a sync field (Sync) of 1 byte, a control data field of 8 bytes, a user data field of a variable length of maximum 180 bytes, and a checksum field of 2 bytes.

The guard space is a period provided between time slots for executing a command such as an initial reset on reception of each time slot. In the preamble field, preamble data having a predetermined unique pattern is written.

In the sync field, a predetermined sync pattern is written. The sync pattern is a known data string disposed in the sync field, used for establishing synchronization when reception data is received, and a data pattern used for confirming that the reception data is received at accurate timing.

In the user data field, user data is written. In the checksum field, a checksum which is a type of error detection code is written. In the following description, the control data, user data and checksum may be simply referred to as "data part". Note that, the above configuration of the data part is one example, and the configuration may be different due to convenience of signal processing.

FIG. 2C illustrates a format of the control data field. As illustrated in FIG. 2C, the control data field of each time slot in the downlink and uplink directions is divided into a data length of 2 bytes, a slot type of 1 byte, a transmission source ID (identifier) of 1 byte, a transmission destination ID of 1 byte, a frame number of 1 byte, a slot number of 1 byte, and a reserve of 1 byte.

The data length indicates, for example, a total data length of "control data area + user data area + checksum". The slot type indicates whether the slot is for voice, for an image, for a command, or for a control slot.

Both the transmission source ID and the transmission destination ID are IDs specific to each apparatus, and are stored, for example, in a non-volatile memory of each apparatus (lobby station 100 and indoor monitor 200). The transmission source ID and the transmission destination ID are set manually (or automatically by special software) at initial installation or the like.

The frame number indicates in what number of frame the slot is when performing the transmission with continuous frames. The slot number indicates what number of slot the slot is in a frame.

### <Configuration of Lobby Station>

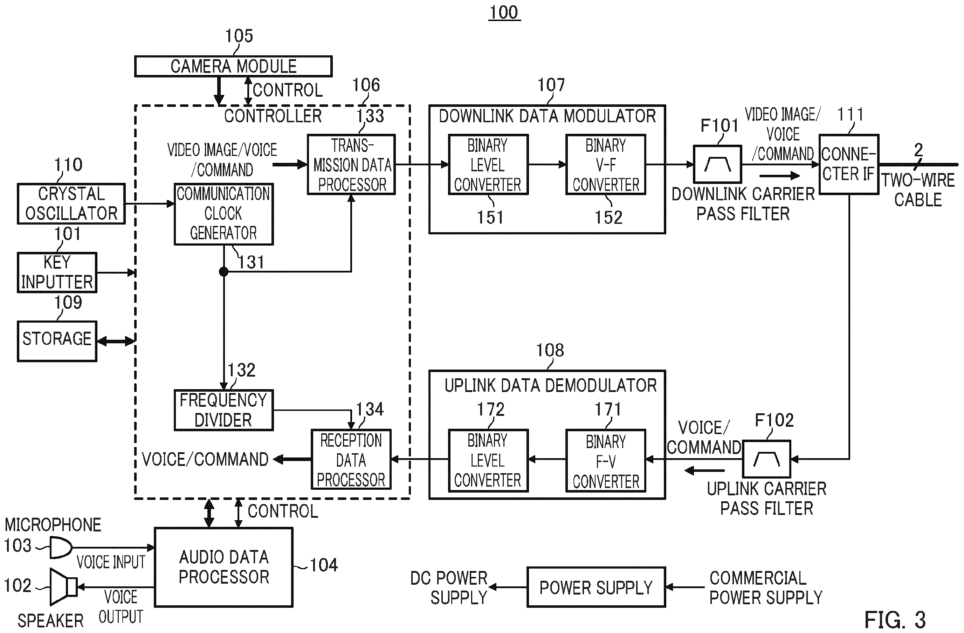

Next, a configuration of lobby station 100 will be described with reference to FIG. 3. As illustrated in FIG. 3, lobby station 100 mainly includes key inputter 101, speaker 102, microphone 103, audio data processor 104, camera module 105, controller 106, downlink data modulator 107, uplink data demodulator 108, storage 109, crystal oscillator 110, and connecter IF (Interface) 111. Lobby station 100 also includes downlink carrier pass filter F101, and uplink carrier pass filter F102.

Controller 106 internally includes communication clock generator 131, frequency divider 132, transmission data processor 133, and reception data processor 134. Downlink data modulator 107 internally includes binary level converter 151 and binary V-F converter 152. Uplink data demodulator 108 includes binary F-V converter 171 and binary level converter 172.

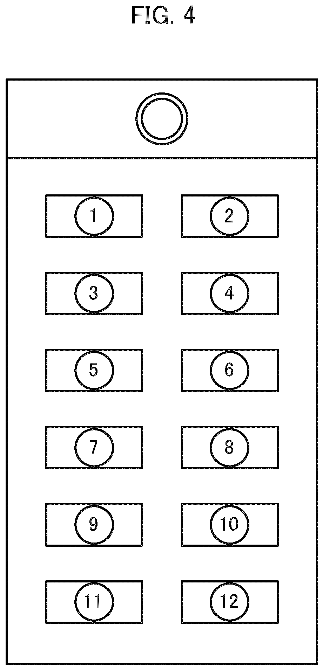

Key inputter 101 includes various buttons including key numbers assigned to respective indoor monitors 200 as illustrated in FIG. 4, and outputs a signal indicating a key number corresponding to button operation and a callout instruction signal to controller 106. Note that, the key numbers are not limited to numbers corresponding one-on-one to physical keys as illustrated in FIG. 4, and may be numbers corresponding to combinations of a plurality of keys like, for example, room numbers.

Speaker 102 converts analog audio data output from audio data processor 104 into voice, and outputs the voice. Microphone 103 collects ambient voice, converts the ambient voice into analog audio data, and outputs the analog audio data to audio data processor 104.

Audio data processor 104 applies analog voice processing such as amplification to analog audio data output from microphone 103, converts the analog audio data into digital audio data, and outputs the digital audio data to controller 106. Further, audio data processor 104 converts digital audio data output from controller 106 into analog audio data, applies processing such as amplification to the analog audio data, and outputs the analog audio data to speaker 102. Such analog/digital conversion is performed by an A/D and D/A converter (not illustrated).

Camera module 105 includes a digital camera, captures a subject to generate digital video data, and sequentially applies compression processing to the video data in accordance with a moving image compression standard such as H.264. The compressed digital video data is output to controller 106.

Controller 106 controls the sections of lobby station 100. For example, in a case where command data related to a video image is input, controller 106 controls an imaging range, backlight correction or the like in camera module 105.

Communication clock generator 131 of controller 106 generates a communication clock (hereinafter, referred to as "downlink communication clock") of a frequency (for example, 24 MHz (n=10)) corresponding to n times (where n is 1 or more) the bit rate of the time slot in the downlink direction based on an oscillation frequency of crystal oscillator 110, and outputs the downlink communication clock to frequency divider 132 and transmission data processor 133.

Frequency divider 132 of controller 106 generates a communication clock (hereinafter, referred to as "uplink communication clock") of a frequency obtained by decreasing the frequency of the downlink communication clock to 1/m (where m is 1 or more (m is preferably 2 or more)), and outputs the uplink communication clock to reception data processor 134. m is determined by a ratio of the bit rate of the time slot in the downlink direction to the bit rate of the time slot in the uplink direction. For example, in a case where the bit rate of the time slot in the downlink direction is 2.4 Mbps and the bit rate of the time slot in the uplink direction is 0.3 Mbps, m=8.

Transmission data processor 133 of controller 106 generates a downlink packet for implementing a call with a video image. Specifically, transmission data processor 133 appropriately divides digital video data output from camera module 105, and writes the divided digital video data in the user data fields of the predetermined time slots ("SL1" to "SL18"). Further, transmission data processor 133 appropriately divides digital audio data output from audio data processor 104, and writes the divided digital audio data in the user data field of the predetermined time slot ("SL19"). Further, transmission data processor 133 generates various command data. For example, in a case where the signal indicating a key number and the callout instruction signal are input from key inputter 101, transmission data processor 133 generates callout command data including a transmission source ID (ID of lobby station 100) and a transmission destination ID (ID of indoor monitor 200 of the communication opposite party). Then transmission data processor 133 appropriately divides the command data, and writes the divided command data in the user data fields of the predetermined time slots ("SL20" to "SL23"). Further, transmission data processor 133 writes the data length of user data written in the user data field of each time slot in the control data field of the time slot. Furthermore, transmission data processor 133 writes preamble data and a sync pattern in each time slot. As a result of these processing procedures, a downlink packet (transmission data) is generated. Transmission data processor 133 performs synchronization with the downlink communication clock, and outputs the downlink packet to downlink data modulator 107.

Reception data processor 134 of controller 106 detects synchronization (timing at the beginning of each bit of the received data) with indoor monitor 200 by using preamble data and a sync pattern included in an uplink packet output from uplink data demodulator 108. Further, reception data processor 134 reproduces the uplink packet by using the uplink communication clock, and extracts digital audio data and command data. Reception data processor 134 outputs the digital audio data to audio data processor 104.

Downlink data modulator 107 performs digital modulation on a digital data string of a downlink packet output from controller 106, and impresses a modulation signal on the downlink carrier. The downlink carrier passes through downlink carrier pass filter F101, and is then transmitted to indoor monitor 200.

The digital modulation is a modulation scheme that discontinuously modulates a carrier wave (carrier). Typical digital modulation schemes include frequency shift keying (FSK) modulation, amplitude shift keying (ASK) modulation, phase shift keying (PSK) modulation and/or the like. In the embodiment, the case of using FSK modulation will be described. Note that, in the FSK modulation, in a case where pulse signals of two levels, the H level and the L level, are modulated to carrier frequencies f1 and f2, respectively, two or more waves are required in respective minimum pulse widths for each carrier.

Binary level converter 151 of downlink data modulator 107 converts an H (High) level of a digital data string into a first voltage value, and converts an L (Low) level thereof into a second voltage value.

Binary V-F converter 152 of downlink data modulator 107 outputs downlink carriers of carrier frequencies corresponding to the respective first and second voltage values. As a result, an FSK modulation waveform is generated in which the H level is converted into a first downlink carrier frequency (for example, 12 MHz) and the L level is converted into a second downlink carrier frequency (for example, 10 MHz).

Uplink data demodulator 108 performs digital demodulation on an uplink carrier that was transmitted from indoor monitor 200 and passed through uplink carrier pass filter F102, and obtains a digital data string of an uplink packet. The digital data string of the uplink packet is output to reception data processor 134.

Binary F-V converter 171 of uplink data demodulator 108 converts an uplink carrier of a first uplink carrier frequency (for example, 2 MHz) into the first voltage value and converts an uplink carrier of a second uplink carrier frequency (for example, 1 MHz) into the second voltage value.

Binary level converter 172 of uplink data demodulator 108 converts the first voltage value into the H level, converts the second voltage value into the L level, and obtains a digital data string of an uplink packet.

Storage 109 is used by controller 106 as a work area when various programs are executed. Further, storage 109 stores in advance various application programs and various software executed by controller 106. Note that, storage 109 is also used as a memory for various settings, data and the like to be retained.

Crystal oscillator 110 includes a crystal oscillator, and outputs a voltage amplitude signal (frequency signal) of an oscillation frequency to communication clock generator 131. Note that, fine-tuning of oscillation frequency by control of communication clock generator 131 is not performed with respect to crystal oscillator 110. Adjustment of oscillation frequency with respect to crystal oscillator 110 is limited to adjustment of oscillation frequency to a center value at the time of factory shipment.

Connecter IF 111 includes a connection terminal for the two-wire cable, and connects the two-wire cable connected to indoor monitor 200 with downlink carrier pass filter F101 and uplink carrier pass filter F102, in a state where a digital modulation signal can be transmitted therebetween.

Downlink carrier pass filter F101 is a filter that has a frequency band (for example, 8.5 MHz to 14 MHz) used for communication of a digital modulation signal in the downlink direction as a pass band.

Uplink carrier pass filter F102 is a filter that has a frequency band (for example, 0.5 MHz to 2.5 MHz) used for communication of a digital modulation signal in the uplink direction as a pass band.

In lobby station 100, a commercial AC power supply is converted into a DC power supply by an AC adapter and DC power is supplied to the sections. Although the AC adapter is external, lobby station 100 may include a built-in power supply. In addition, lobby station 100 may include a simple display.

### <Configuration of Indoor Monitor>

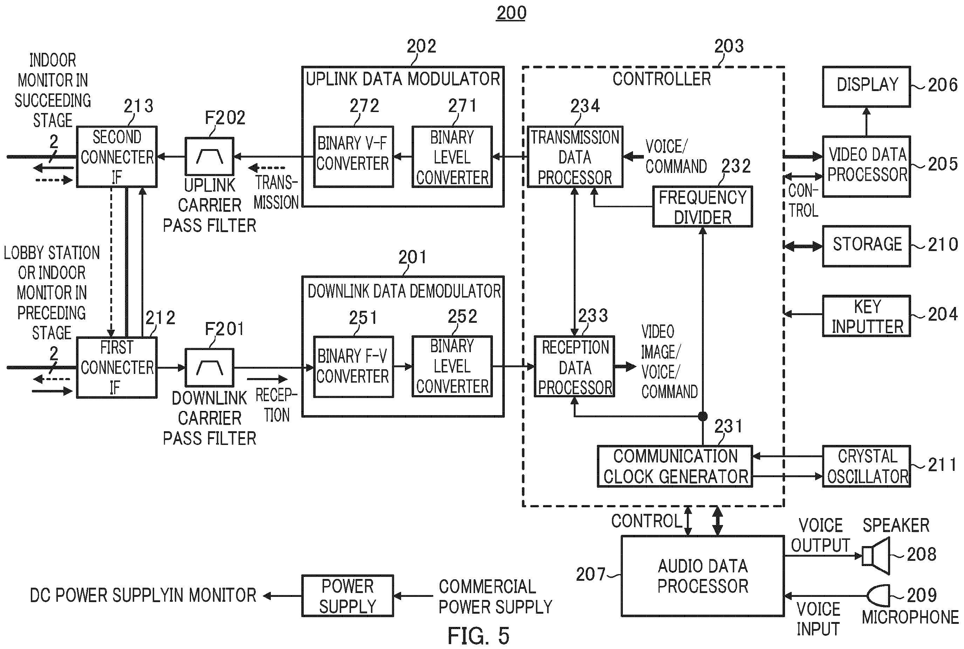

Next, a configuration of indoor monitor 200 will be described with reference to FIG. 5. As illustrated in FIG. 5, indoor monitor 200 mainly includes downlink data demodulator 201, uplink data modulator 202, controller 203, key inputter 204, video data processor 205, display 206, audio data processor 207, speaker 208, microphone 209, storage 210, crystal oscillator 211, first connecter IF 212, and second connecter IF 213. Indoor monitor 200 also includes downlink carrier pass filter F201, and uplink carrier pass filter F202.

Controller 203 internally includes communication clock generator 231, frequency divider 232, reception data processor 233, and transmission data processor 234. Downlink data demodulator 201 includes binary F-V converter 251 and binary level converter 252. Uplink data modulator 202 internally includes binary level converter 271 and binary V-F converter 272.

Downlink data demodulator 201 performs digital demodulation (FSK demodulation) on the downlink carrier that was transmitted from lobby station 100 and passed through downlink carrier pass filter F201, and obtains a digital data string of a downlink packet. The digital data string of the downlink packet is output to reception data processor 233.

Binary F-V converter 251 of downlink data demodulator 201 converts the downlink carrier of the first downlink carrier frequency into the first voltage value and converts the downlink carrier of the second downlink carrier frequency into the second voltage value.

Binary level converter 252 of downlink data demodulator 201 converts the first voltage into the H level, converts the second voltage value into the L level, and obtains a digital data string of a downlink packet.

Uplink data modulator 202 performs digital modulation on a digital data string of an uplink packet output from controller 203, and impresses a modulation signal on the uplink carrier. The uplink carrier passes through uplink carrier pass filter F202, and is then transmitted to lobby station 100.

Binary level converter 271 of uplink data modulator 202 converts an H (High) level of a digital data string into a first voltage value and converts the L (Low) level thereof into a second voltage value.

Binary V-F converter 272 of uplink data modulator 202 outputs carrier waves of carrier frequencies corresponding to the respective first and second voltage values. As a result, an FSK modulation waveform is generated in which the H level is converted into a first uplink carrier frequency (for example, 2 MHz) and the L level is converted into a second uplink carrier frequency (for example, 1 MHz).

Controller 203 controls the sections of indoor monitor 200.

Communication clock generator 231 of controller 203 generates a downlink communication clock based on an oscillation frequency of crystal oscillator 211, and outputs the downlink communication clock to frequency divider 232 and reception data processor 233. Further, communication clock generator 231 controls the oscillation frequency of crystal oscillator 211 based on a transmission-side communication clock of lobby station 100.

Frequency divider 232 of controller 203 generates an uplink communication clock in which the frequency of the downlink communication clock is decreased to 1/m, and outputs the uplink communication clock to transmission data processor 234.

Reception data processor 233 of controller 203 detects synchronization (timing at the beginning of each bit of the received data) with lobby station 100 by using preamble data and a sync pattern included in a downlink packet output from downlink data demodulator 201. Further, reception data processor 233 reproduces the downlink packet by using the downlink communication clock, and extracts digital video data, digital audio data and command data. Reception data processor 233 outputs the digital video data to video data processor 205, and outputs the digital audio data to audio data processor 207.

Transmission data processor 234 of controller 203 generates an uplink packet. Specifically, transmission data processor 234 appropriately divides digital audio data output from audio data processor 207, and writes the divided digital audio data in the user data field of the predetermined time slot ("SL1"). Further, transmission data processor 234 generates various command data. For example, in a case where an incoming call is detected, transmission data processor 234 generates response command data including a transmission source ID (ID of indoor monitor 200) and a transmission destination ID (ID of lobby station 100). Then, transmission data processor 234 appropriately divides the command data and writes the divided command data in the user data field of the predetermined time slot ("SL2"). Further, transmission data processor 234 writes the data length of user data or the like written in the user data field of each time slot in the control data field of the time slot. Furthermore, transmission data processor 234 writes preamble data and a sync pattern in each time slot. As a result of these processing procedures, an uplink packet (transmission data) is generated. Transmission data processor 234 performs synchronization with the uplink communication clock, and outputs the uplink packet to uplink data modulator 202.

Key inputter 204 includes various buttons and outputs user instructions based on button operation to controller 203. Key inputter 204 may be a touch panel.

Video data processor 205 applies image processing for making an LCD display on the screen of display 206 to the video data output from controller 203 and outputs video data after the image processing to display 206. Display 206 displays the video data output from video data processor 205 on the screen.

Audio data processor 207 converts digital audio data output from controller 203 into analog audio data, applies processing such as amplification to the analog audio data, and outputs the analog audio data to speaker 208. Further, audio data processor 207 applies analog voice processing such as amplification to the analog audio data output from microphone 209, converts the analog audio data into digital audio data, and outputs the digital audio data to controller 203.

Speaker 208 converts the analog audio data output from audio data processor 207 into voice, and outputs the voice. Microphone 209 collects ambient voice, converts the ambient voice into analog audio data, and outputs the analog audio data to audio data processor 207.

Storage 210 is used by controller 203 as a work area when various programs are executed. Further, storage 210 stores in advance various application programs and various software executed by controller 203. Note that, storage 210 is also used as a memory for various settings, data and the like to be retained.

Crystal oscillator 211 includes a crystal oscillator, and outputs a voltage amplitude signal (frequency signal) of an oscillation frequency to communication clock generator 231. Further, crystal oscillator 211 fine-tunes the oscillation frequency based on control of communication clock generator 231. Note that, the oscillation frequency of crystal oscillator 211 is adjusted to a center value by register setting by a microcomputer or the like at the time of factory shipment. Details of configurations of communication clock generator 231 and crystal oscillator 211 will be described later.

First connecter IF 212 includes a connection terminal for the two-wire cable, and connects the two-wire cable connected to lobby station 100 or indoor monitor 200 in the preceding stage with downlink carrier pass filter F201 and uplink carrier pass filter F202, in a state where a digital modulation signal can be transmitted therebetween.

Second connecter IF 213 includes a connection terminal for the two-wire cable, and connects the two-wire cable connected to indoor monitor 200 in the succeeding stage with downlink carrier pass filter F201 and uplink carrier pass filter F202, in a state where a digital modulation signal can be transmitted therebetween.

Further, first connecter IF 212 is connected to second connecter IF 213. Thus, lobby station 100 or indoor monitor 200 in the preceding stage can be connected with indoor monitor 200 in the succeeding stage, in a state where a digital modulation signal can be transmitted therebetween.

Downlink carrier pass filter F201 is a filter that has a frequency band (for example, 8.5 MHz to 14 MHz) used for communication of a digital modulation signal in the downlink direction as a pass band.

Uplink carrier pass filter F202 is a filter that has a frequency band (for example, 0.5 MHz to 2.5 MHz) used for communication of a digital modulation signal in the uplink direction as a pass band.

In indoor monitor 200, the commercial AC power supply is converted into a DC power supply by an AC adapter and DC power is supplied to the sections. Although the AC adapter is external, indoor monitor 200 may include a built-in power supply.

### <Frequency Band of Each Signal>

Next, frequency bands of respective signals transmitted and received by door phone system 1 will be described in comparison with those of the conventional analog system.

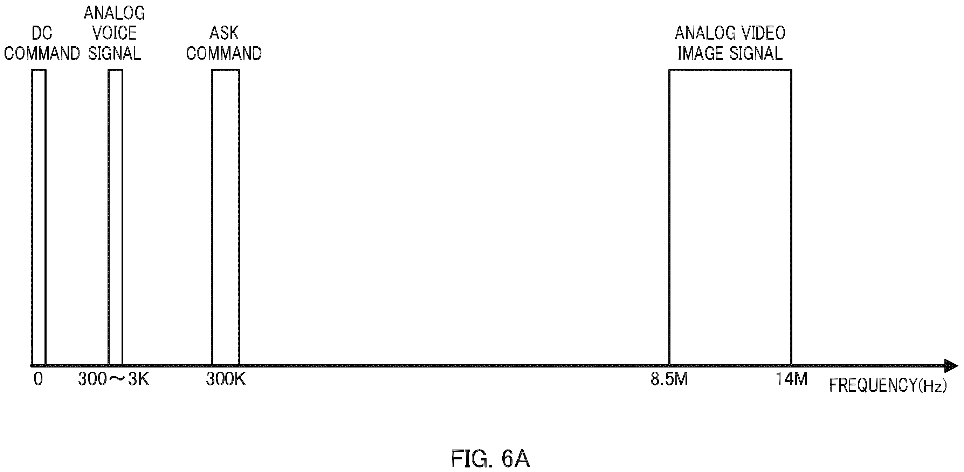

In an analog door phone system, as illustrated in FIG. 6A, uplink and downlink DC commands, uplink and downlink analog audio signals, uplink and downlink ASK commands, and downlink analog video signals are transmitted and received in different frequency bands from each other.

In an example of FIG. 6A, 0 Hz (DC component) is used for the DC commands, the analog audio signals are transmitted and received in a frequency band from 300 Hz to about 3 kHz, the ASK commands are transmitted and received, for example, at a carrier frequency of 300 kHz, and the analog video signals are transmitted and received in a frequency band from 8.5 MHz to about 14 MHz. Thus, the DC commands, analog audio signals, ASK commands, and analog video signals are transmitted in the frequency bands different from each other (are frequency division multiplexed).

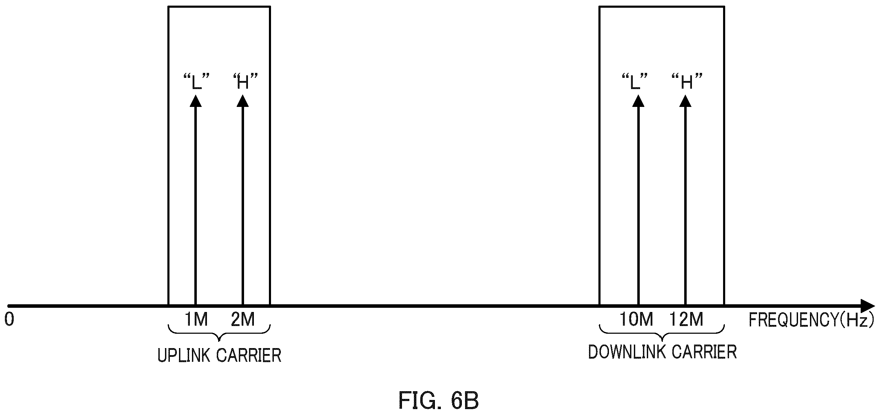

On the other hand, in door phone system 1 according to the embodiment, as illustrated in FIG. 6B, an uplink carrier in which digital modulation is performed on a digital data string of an uplink packet including digital audio data and command data, and a downlink carrier in which digital modulation is performed on a digital data string of a downlink packet including digital video data, digital audio data, and command data are transmitted and received in different frequency bands from each other.

In an example of FIG. 6B, frequencies of 1 MHz and 2 MHz are used for the uplink carrier, and frequencies of 10 MHz and 12 MHz are used for the downlink carrier.

Thus, since the frequency band of the uplink carrier and the frequency band of the downlink carrier are different in door phone system 1 according to the embodiment, digital communication by frequency division duplex (FDD) is possible. Therefore, there is no need to secure a margin of delay so that a transmission rate can be maintained even in a system with a large delay in a communication path.

Note that, the numerical values of the respective frequency bands in FIG. 6B are only exemplary, and the embodiment is not limited to the numerical values. The down carrier of door phone system 1 according to the embodiment is workable as long as the down carrier uses frequencies within the analog video data band of the conventional analog door phone system to be replaced.

### <Requirement for Crystal Oscillation Frequency>

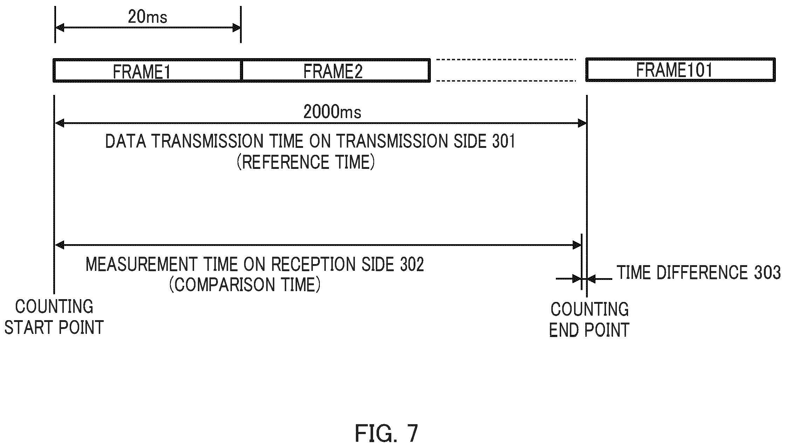

Next, requirements for a crystal oscillation frequency of the embodiment will be described with reference to FIG. 7.

In a case where a time slot of data generated by sampling at a clock generated based on a crystal oscillation frequency of transmission-side equipment is sampled at a clock generated based on a crystal oscillation frequency of reception-side equipment, in a system that resynchronizes at a first bit of the sync pattern within the time slot, deviation of a reception-side clock with respect to a transmission-side clock becomes the maximum in data of a final bit at 1,528 bits (=(1+8+180+2)×8) after the first bit of the sync pattern within the same time slot. Note that, the system resynchronizes at the first bit of the sync pattern in the next time slot.

As a system requirement, it is assumed here that an allowable range of the deviation of the clock in the case of sampling the data of 1,528 bits of the time slot is, for example, up to 1/5 (1/10 before and after) of one-bit data length, that is, within ±65 ppm (=1/1,528×1/5×1/2). If the reception-side crystal oscillation frequency is adjusted so that the deviation of the reception-side clock is always within ±65 ppm based on the transmission-side clock, the reception-side equipment can perform decoding processing on the reception data.

Therefore, in the embodiment, as illustrated in FIG. 7, time difference 303 between data transmission time 301 on the transmission side (lobby station 100) and measurement time 302 on the reception side (indoor monitor 200) is detected with a prescribed number of pieces of data (for example, the number of pieces of data for 100 frames), and the reception-side crystal oscillation frequency is adjusted according to the time difference. Data transmission time 301 is a time (first time) occupied by the prescribed number of pieces of data of transmission data sampled at a communication clock generated based on the crystal oscillation frequency of the transmission-side equipment. Measurement time 302 is a time (second time) corresponding to the prescribed number of pieces of data counted by a communication clock generated based on the crystal oscillation frequency of the reception-side equipment.

Here, it is assumed that data transmission time 301 used as a reference time is a time when lobby station 100 transmits a digital data string of a downlink packet. Further, it is assumed that measurement time 302 used as a comparison time is a time measured by communication clock generator 231 of indoor monitor 200 using the downlink communication clock.

When the time difference between the data transmission time on the transmission side and the measurement time on the reception side is detected by using one downlink time slot or one downlink frame (24 time slots), the accumulation of difference is small and the time difference is small, and therefore a high-speed clock is necessary.

In the embodiment, the minimum range of adjustment width is determined in advance, for example, to maximum ±5ppm, according to the system requirements. A frequency of a measurement clock for detection of the time difference is determined by the minimum range of adjustment width.

### <Internal Configuration of Communication Clock Generator>

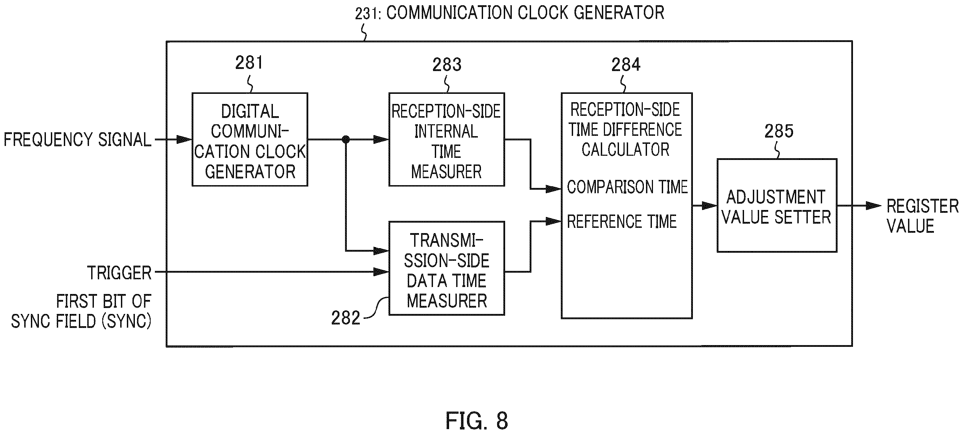

Next, details of an internal configuration of communication clock generator 231 of indoor monitor 200 will be described with reference to FIG. 8. As illustrated in FIG. 8, communication clock generator 231 includes digital communication clock generator 281, transmission-side data time measurer 282, reception-side internal time measurer 283, reception-side time difference calculator 284, and adjustment value setter 285.

Digital communication clock generator 281 generates a measurement clock of a frequency (for example, 48 MHz) based on the minimum range of adjustment width on the basis of a crystal oscillation frequency of crystal oscillator 211, and continuously outputs the measurement clock to transmission-side data time measurer 282 and reception-side internal time measurer 283. Further, digital communication clock generator 281 generates a downlink communication clock on the basis of the crystal oscillation frequency of crystal oscillator 211, and outputs the downlink communication clock to frequency divider 232 and reception data processor 233. Here, both frequencies of the measurement clock and the down communication clock are known values generated on the basis of the crystal oscillation frequency of the reception-side equipment, and the frequency of the measurement clock may be equal to the frequency of the communication clock.

Transmission-side data time measurer 282 measures a time occupied by the prescribed number of pieces of data of the reception signal (time from a counting start point of the reception data to a counting end point) (hereinafter, referred to as "reference time"). The reference time corresponds to a time (301 in FIG. 7) occupied by the prescribed number of pieces of data in a digital communication frame transmitted from lobby station 100 which is the transmission-side equipment.

Reception-side internal time measurer 283 converts the time corresponding to the prescribed number of pieces of data counted by the communication clock into a count number of the measurement clock, counts the measurement clock output from digital communication clock generator 281 from the counting start point by the number corresponding to the prescribed number of pieces of data, and measures a time (302 in FIG. 7) (hereinafter, referred to as "comparison time") from the counting start to the end of the measurement clock. Note that, there is no limitation in particular to the counting start point in transmission-side data time measurer 282 and reception-side internal time measurer 283. For example, the counting start point in transmission-side data time measurer 282 may be a data start trigger point of a first bit of a sync field (Sync) on a time slot, or may be a trigger point in which a sync pattern (Sync) on a time slot is detected. Reception-side internal time measurer 283 performs the counting, with one time slot length between the trigger points, until reaching a prescribed number of communication frames (prescribed number of data).

Reception-side time difference calculator 284 calculates the difference (303 in FIG. 7) between the reference time measured by transmission-side data time measurer 282 and the comparison time measured by reception-side internal time measurer 283.

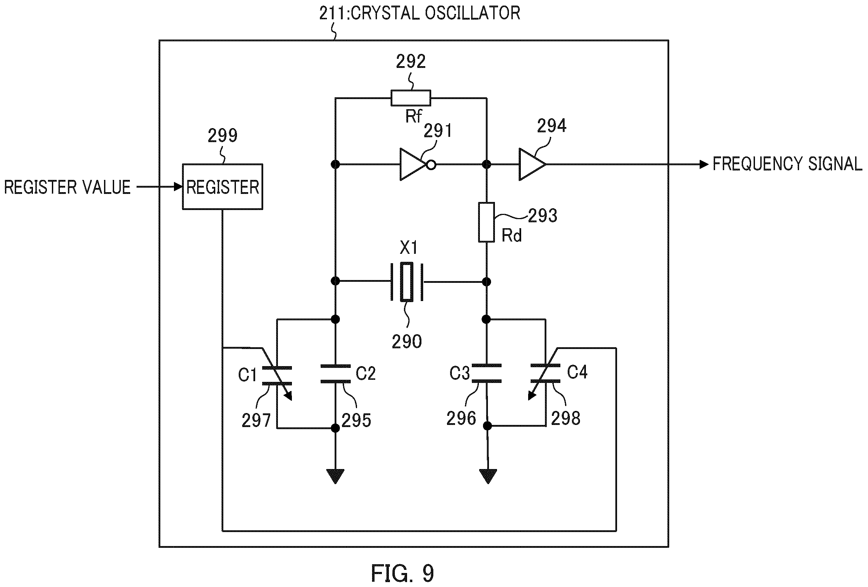

In order to reduce the difference between the reference time and the comparison time, adjustment value setter 285 sets a setting value corresponding to the time difference calculated by reception-side time difference calculator 284 to register 299 (see FIG. 9) of crystal oscillator 211, and adjusts the oscillation frequency of crystal oscillator 211. Note that, in a case where the time difference calculated by reception-side time difference calculator 284 is equal to or less than a predetermined threshold value, adjustment value setter 285 may stop adjusting the oscillation frequency. Further, the threshold value may have hysteresis.

Adjustment value setter 285 causes storage 210 to store a setting value corresponding to the oscillation frequency of crystal oscillator 211 adjusted at the previous callout for each indoor monitor 200. Adjustment value setter 285 calls out the setting value stored in storage 210 at the next callout, and sets the setting value as a new initial setting value to register 299.

Note that, the oscillation frequency of crystal oscillator 110 of lobby station 100 and the oscillation frequency of crystal oscillator 211 of indoor monitor 200 are adjusted to a center value at the time of factory shipment. Further, each block of communication clock generator 231 does not operate (is turned off) when the center value adjustment is performed at the time of factory shipment. Further, at the time of normal operation, each block of communication clock generator 231 always operates (is turned on), and the oscillation frequency is always automatically adjusted.

In the embodiment, the adjustment operation of the crystal oscillation frequency in lobby station 100 and indoor monitor 200 can be performed in the background in parallel with the reception data processing at the time of normal operation. As a result, there is no need to set an adjustment time and digital communication with high accuracy can be performed within a fluctuation range of initial adjustment in which no bit errors of the reception data occur in normal reception operation.

### <Internal Configuration of Crystal Oscillator>

Next, details of an internal configuration of crystal oscillator 211 of indoor monitor 200 will be described with reference to FIG. 9. As illustrated in FIG. 9, crystal oscillator 211 adopts a configuration of adding input capacitance 297 (capacitance value C1), output capacitance 298 (capacitance value C4), and register 299 to a general CMOS inverter crystal oscillation circuit including crystal oscillator 290 (oscillation frequency XI), inverter 291, feedback resistor 292 (resistance value Rf), dumping resistor 293 (resistance value Rd), buffer 294, input capacitance 295 (capacitance value C2), and output capacitance 296 (capacitance value C3).

Capacitance value C1 of input capacitance 297 and capacitance value C4 of output capacitance 298 are set in advance to prescribed values corresponding to initial values of register 299.

When a new values is set to register 299 by communication clock generator 231 (adjustment value setter 285), capacitance value C1 of input capacitance 297 or capacitance value C4 of output capacitance 298 is adjusted according to the value. As a result, the oscillation frequency of crystal oscillator 211 is fine-tuned to match the crystal oscillation frequency of indoor monitor 200 on the transmission side.

Note that, the internal configuration of crystal oscillator 211 of indoor monitor 200 is described here, but the internal configuration of crystal oscillator 110 of lobby station 100 is the same. The frequency adjustment of crystal oscillator 110 of lobby station 100 is used when adjusting to the center value by register setting at the time of factory shipment.

### <Call Sequence>

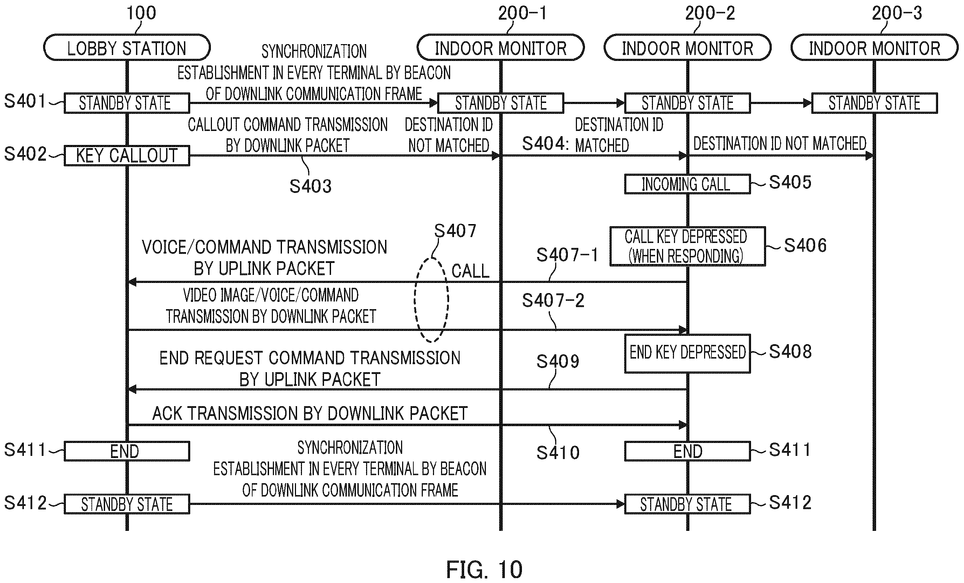

Next, various sequences of door phone system 1 according to the embodiment will be described with reference to FIGS. 10, 11, and 12. Note that, FIGS. 10, 11, and 12 illustrate examples in which one lobby station 100 and three indoor monitors 200-1, 200-2, and 200-3 are connected by daisy chain wiring.

FIG. 10 illustrates a sequence in a case where lobby station 100 and indoor monitor 200-2 come into the call state, which is activated by lobby station 100. As a precondition, it is assumed that in the standby state in which data is not transmitted or received between each apparatus (S401), synchronization is established between lobby station 100 and respective indoor monitors 200-1, 200-2, and 200-3 by a beacon of a downlink packet.

In a case where key callout operation to depress a callout button of lobby station 100 is performed (S402) in the standby state, lobby station 100 transmits a downlink packet including callout command data in which an ID of indoor monitor 200-2 is the transmission destination ID to every indoor monitor 200 (S403). Note that, the downlink packet including the callout command data may include digital audio data or digital video data.

Each of indoor monitors 200-1, 200-2, and 200-3 determines whether the transmission destination ID of the received downlink packet matches the own IDs of indoor monitors 200-1, 200-2, and 200-3 stored in storage 210 (S404).

Since the transmission destination ID of the downlink packet matches the own ID of indoor monitor 200-2, indoor monitor 200-2 performs incoming call processing such as outputting a callout voice from speaker 208 (S405). Note that, indoor monitors 200-1 and 200-3 ignore the received downlink packet since the transmission destination ID of the downlink packet does not match the own IDs of indoor monitors 200-1 and 200-3.

Then, in a case where operation to depress a call key of indoor monitor 200-2 is performed (S406), indoor monitor 200-2 responds to lobby station 100, and lobby station 100 and indoor monitor 200-2 come into the call state (S407).

Note that, indoor monitor 200-2 may start continuous uplink communication frame transmission at the same time as the incoming call from lobby station 100. Further, in a case where indoor monitor 200-3 at the end is in the standby state (S401), synchronization may be established between lobby station 100 and respective indoor monitors 200-1, 200-2, and 200-3 by a beacon of a communication frame of an uplink packet transmitted from indoor monitor 200-3. Indoor monitor 200-3 being at the end may be set manually at the time of installation, or may be determined by indoor monitor 200-3 detecting that second connecter IF 213 in the downlink direction is free.

In the call state, indoor monitor 200-2 transmits digital audio data and command data to lobby station 100 by an uplink packet (S407-1). Further, lobby station 100 transmits digital video data, digital audio data, and command data to indoor monitor 200-2 by a downlink packet (S407-2). Thus, a call with a video image can be performed between lobby station 100 and indoor monitor 200.

Note that, in the call state, indoor monitor 200-2 fine-tunes the crystal oscillation frequency of crystal oscillator 211.

Then, in a case where operation to depress an end key of indoor monitor 200-2 is performed (S408), indoor monitor 200-2 transmits an uplink packet including end request command data to lobby station 100 (S409). When lobby station 100 extracts the end request command data, lobby station 100 transmits a downlink packet including ACK (acknowledgement) command data to indoor monitor 200-2 (S410).

Then, lobby station 100 and indoor monitor 200-2 end the communication (S411), and come into the standby state (S412).

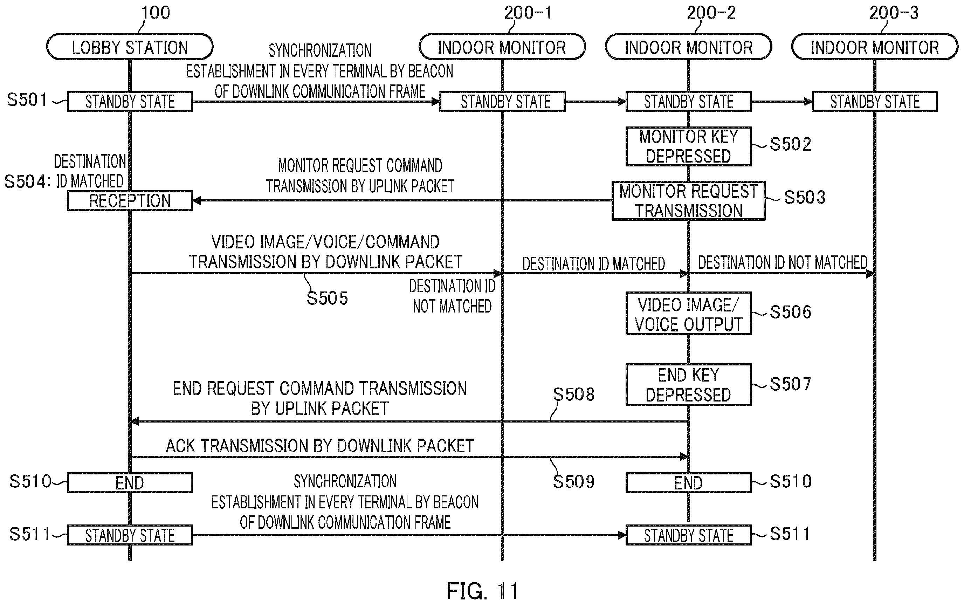

FIG. 11 illustrates a sequence in a case of monitoring an image of lobby station 100, which is activated by indoor monitor 200-2. As a precondition, it is assumed that in the standby state (S501), synchronization is established between lobby station 100 and respective indoor monitors 200-1, 200-2, and 200-3 by a beacon of a downlink packet.

In a case where operation to depress a monitor key of indoor monitor 200-2 is performed (S502) in the standby state, indoor monitor 200-2 transmits an uplink packet including monitor request command data in which an ID of lobby station 100 is the transmission destination ID to lobby station 100 (S503).

Note that, indoor monitor 200-2 may start continuous uplink communication frame transmission at the same time when the operation to depress the monitor key of indoor monitor 200-2 is performed. Further, in a case where indoor monitor 200-3 at the end is in the standby state (S501), synchronization may be established between lobby station 100 and respective indoor monitors 200-1, 200-2, and 200-3 by a beacon of a communication frame of an uplink packet transmitted from indoor monitor 200-3.

Lobby station 100 determines whether the transmission destination ID of the received uplink packet matches the own ID of lobby station 100 stored in storage 109 (S504).

Since the transmission destination ID of the uplink packet matches the own ID of lobby station 100, lobby station 100 transmits a downlink packet in which the ID of indoor monitor 200-2 is the transmission destination ID and which includes digital video data, digital audio data, and command data to indoor monitor 200-2 (S505).

Since the transmission destination ID of the downlink packet matches the own ID of indoor monitor 200-2, indoor monitor 200-2 outputs a video image and voice (S506). Thus, it is possible for a user of indoor monitor 200-2 to monitor the image of lobby station 100. Note that, since the transmission destination ID of the downlink packet does not match the own IDs of indoor monitors 200-1 and 200-3, indoor monitors 200-1 and 200-3 ignore the received downlink packet.

Then, in a case where the operation to depress the end key of indoor monitor 200-2 is performed (S507), indoor monitor 200-2 transmits an uplink packet including end request command data to lobby station 100 (S508). When lobby station 100 extracts the end request command data, lobby station 100 transmits a downlink packet including ACK (acknowledgement) command data to indoor monitor 200-2 (S509).

Then, lobby station 100 and indoor monitor 200-2 end the communication (S510), and come into the standby state (S511).

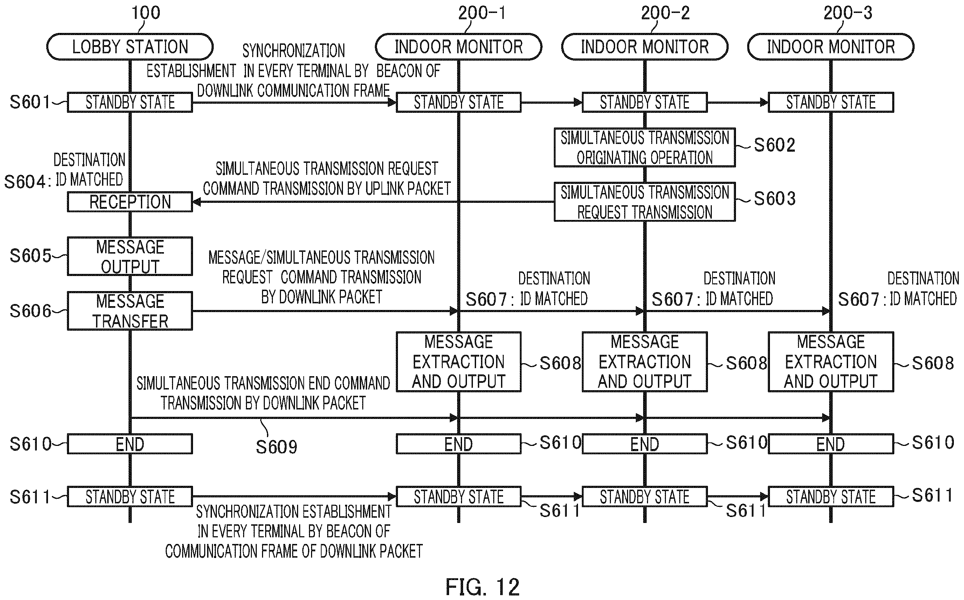

FIG. 12 illustrates a sequence in a case where, in an emergency or the like, a message is simultaneously transmitted to all the apparatus (lobby station 100 and indoor monitor 200), which is activated by indoor monitor 200-2. As a precondition, it is assumed that in the standby state (S601), synchronization is established between lobby station 100 and respective indoor monitors 200-1, 200-2, and 200-3 by a beacon of a downlink packet. Further, it is assumed that storage 109 of lobby station 100 and storage 210 of every indoor monitor 200 store a simultaneous transmission-specific ID (for example, "0xFF").

In a case where operation to depress a simultaneous transmission originating key of indoor monitor 200-2 is performed (S602) in the standby state, indoor monitor 200-2 transmits an uplink packet in which the simultaneous transmission-specific ID is the transmission destination ID and which includes simultaneous transmission request command data and message data to lobby station 100 (S603).

Note that, indoor monitor 200-2 may start continuous uplink communication frame transmission at the same time when the operation to depress the simultaneous transmission originating key of indoor monitor 200-2 is performed. Further, in a case where indoor monitor 200-3 at the end is in the standby state (S601), synchronization may be established between lobby station 100 and respective indoor monitors 200-1, 200-2, and 200-3 by a beacon of a communication frame of an uplink packet transmitted from indoor monitor 200-3.

Lobby station 100 determines whether the transmission destination ID of the received uplink packet matches the ID stored in storage 109 (S604).

Since the transmission destination ID of the uplink packet is the simultaneous transmission-specific ID, lobby station 100 extracts the message data, and displays an image of the message or outputs voice of the message (S605). At the same time, lobby station 100 transfers the message by transmitting a downlink packet in which the simultaneous transmission-specific ID is the transmission destination ID and which includes the simultaneous transmission request command data and message data (S606).

Each of indoor monitors 200-1, 200-2, and 200-3 determines whether the transmission destination ID of the received downlink packet matches the ID stored in storage 210 (S607).

Since the transmission destination ID of the downlink packet is the simultaneous transmission-specific ID, each of indoor monitors 200-1, 200-2, and 200-3 extracts the message data, and displays an image of the message or outputs voice of the message (S608). Note that, in the embodiment, the method of notifying the message may be other than the image display or the voice output.

Then, in a case where a certain period of time elapses, lobby station 100 transmits a downlink packet including simultaneous transmission end command data (S609).

Then, lobby station 100 and indoor monitors 200-1, 200-2, and 200-3 end the communication (S610), and come into the standby state (S611).

Note that, in the simultaneous transmission according to the embodiment, there may be an option of displaying no image of a message or outputting no voice of the message in lobby station 100. Further, a message may be simultaneously transmitted to every indoor monitor 200 by setting a simultaneous transmission mode by pressing keys of lobby station 100 (simultaneously pressing a plurality of keys, inputting a password by numeric keys, or the like).

### <Effects>

As mentioned above, in the embodiment, by varying the communication rates in the uplink and downlink directions, it is possible to separate the frequency band of the uplink carrier and the frequency band of the downlink carrier by performing digital modulation by FSK and conducting the transmission in both the uplink and downlink directions, for example, thereby enabling digital communication by frequency division duplex (FDD). Therefore, since there is no need to secure a margin of delay, bidirectional digital transmission can be implemented without lowering a transmission rate even in a system with a large delay in a communication path, and higher image quality and higher voice quality of an indoor monitor and higher output voice quality of a lobby station can be achieved.

Although an example of door phone system 1 for multiple dwelling houses, which includes lobby station 100 and indoor monitor 200, has been described in the embodiment, the present invention is not limited thereto, and can be applied, for example, to door phone systems for detached houses, which include an entrance slave unit and an indoor base unit. Further, the present invention can be applied to a general system including information communication apparatus.

Even in a case where a first terminal and a second terminal respectively transmit and receive using different cables (of a single wire or a plurality of wires) to perform communication, and a transmission-side cable and a reception-side cable are bundled and crosstalk from one cable to the other cable occurs, the embodiment is capable of separating frequency bands of signals transmitted and received by each cable by frequency division duplex so that it is possible to prevent occurrence of communication errors due to crosstalk.

Further, the embodiment is very effective even in a case where a first terminal performs transmission to a second terminal by using a plurality of cables (of a single wire or a plurality of wires), and the plurality of cables are bundled.

### (Embodiment 2)

In Embodiment 2, a case where a transmission-side block and a reception-side block operate at respective communication clocks in a lobby station and an indoor monitor will be described. In Embodiment 2, internal configurations of lobby station 100A and indoor monitor 200A are partially changed from those of lobby station 100 and indoor monitor 200 described in Embodiment 1. Note that, since a system configuration of the embodiment is the same as that of FIG. 1 described in Embodiment 1, a description thereof will be omitted.

### <Configuration of Lobby Station>

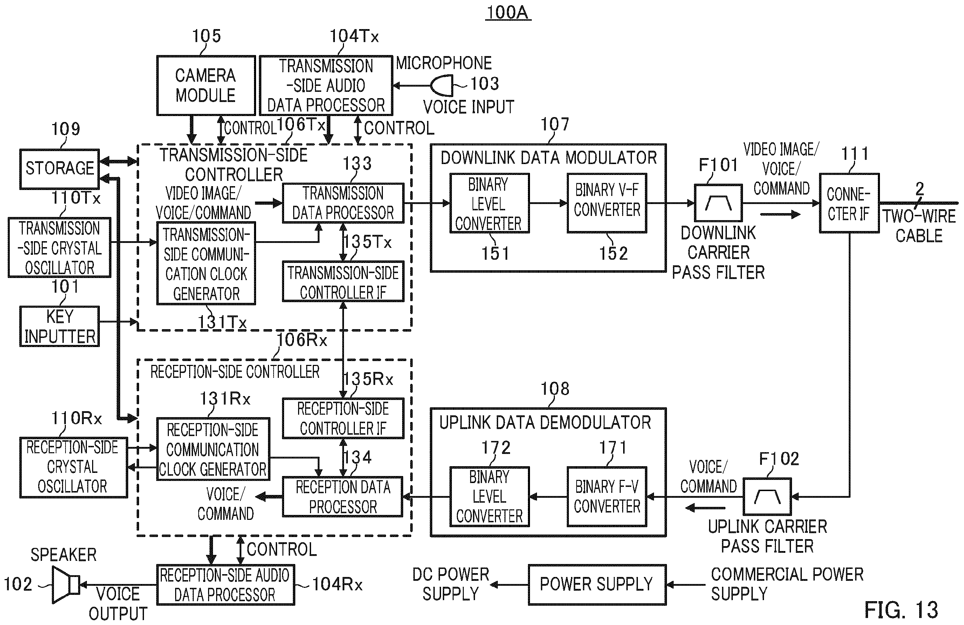

Next, a configuration of lobby station 100A of the embodiment will be described with reference to a block diagram in FIG. 13. Note that, in lobby station 100A illustrated in FIG. 13, components common to those of lobby station 100 illustrated in FIG. 3 are assigned the same reference signs as in FIG. 3 and descriptions thereof will be omitted. In lobby station 100A, controller 106 is divided into two of transmission-side controller 106Tx and reception-side controller 106Rx in comparison with lobby station 100. Accordingly, audio data processor 104 is divided into transmission-side audio data processor 104Tx and reception-side audio data processor 104Rx. Further, lobby station 100A includes two crystal oscillators of transmission-side crystal oscillator 110Tx and reception-side crystal oscillator 110Rx.

Transmission-side controller 106Tx internally includes transmission-side communication clock generator 131Tx, transmission data processor 133, and transmission-side controller IF 135Tx. Reception-side controller 106Rx internally includes reception-side communication clock generator 131Rx, reception data processor 134, and reception-side controller IF 135Rx.

Key inputter 101, transmission-side audio data processor 104Tx, camera module 105, and transmission-side crystal oscillator 110Tx are connected to transmission-side controller 106Tx. Reception-side audio data processor 104Rx and reception-side crystal oscillator 110Rx are connected to reception-side controller 106Rx. Speaker 102 is connected to reception-side audio data processor 104Rx, and microphone 103 is connected to transmission-side audio data processor 104Tx.

Transmission-side audio data processor 104Tx applies analog voice processing such as amplification to analog audio data output from microphone 103, converts the analog audio data into digital audio data, and outputs the digital audio data to transmission-side controller 106Tx. Reception-side audio data processor 104Rx converts digital audio data output from reception-side controller 106Rx into analog audio data, applies processing such as amplification to the analog audio data, and outputs the analog audio data to speaker 102.

Transmission-side communication clock generator 131Tx of transmission-side controller 106Tx generates a downlink communication clock based on an oscillation frequency of transmission-side crystal oscillator 110Tx, and outputs the downlink communication clock to transmission data processor 133.

Transmission-side controller IF 135Tx of transmission-side controller 106Tx connects transmission-side controller 106Tx and reception-side controller 106Rx in a state where a signal can be transmitted.

Reception-side communication clock generator 131Rx of reception-side controller 106Rx generates an uplink communication clock based on an oscillation frequency of reception-side crystal oscillator 110Rx, and outputs the uplink communication clock to reception data processor 134. Further, reception-side communication clock generator 131Rx controls the oscillation frequency of reception-side crystal oscillator 110Rx based on a transmission-side communication clock of indoor monitor 200 installed at the end. Note that, the frequency of the uplink communication clock is 1/m (where m is 1 or more) of the frequency of the downlink communication clock.

Reception-side controller IF 135Rx of reception-side controller 106Rx connects transmission-side controller 106Tx and reception-side controller 106Rx in a state where a signal can be transmitted.

Transmission-side crystal oscillator 110Tx includes a crystal oscillator, and outputs a voltage amplitude signal (frequency signal) of an oscillation frequency to transmission-side communication clock generator 131Tx. Note that, fine-tuning of oscillation frequency by control of transmission-side communication clock generator 131Tx is not performed with respect to transmission-side crystal oscillator 110Tx. Adjustment of oscillation frequency with respect to transmission-side crystal oscillator 110Tx is limited to adjustment of oscillation frequency to a center value at the time of factory shipment.

Reception-side crystal oscillator 110Rx includes a crystal oscillator, and outputs a voltage amplitude signal (frequency signal) of an oscillation frequency to reception-side communication clock generator 131Rx. Note that, the oscillation frequency of reception-side crystal oscillator 110Rx is adjusted to a center value by register setting by a microcomputer or the like at the time of factory shipment. Further, each block (see FIG. 8) of reception-side communication clock generator 131Rx does not operate (is turned off) when the center value adjustment is performed at the time of factory shipment. Further, at the time of normal operation, each block of reception-side communication clock generator 131Rx always operates (is turned on), and the oscillation frequency of reception-side crystal oscillator 110Rx is always automatically adjusted.

### <Configuration of Indoor Monitor>

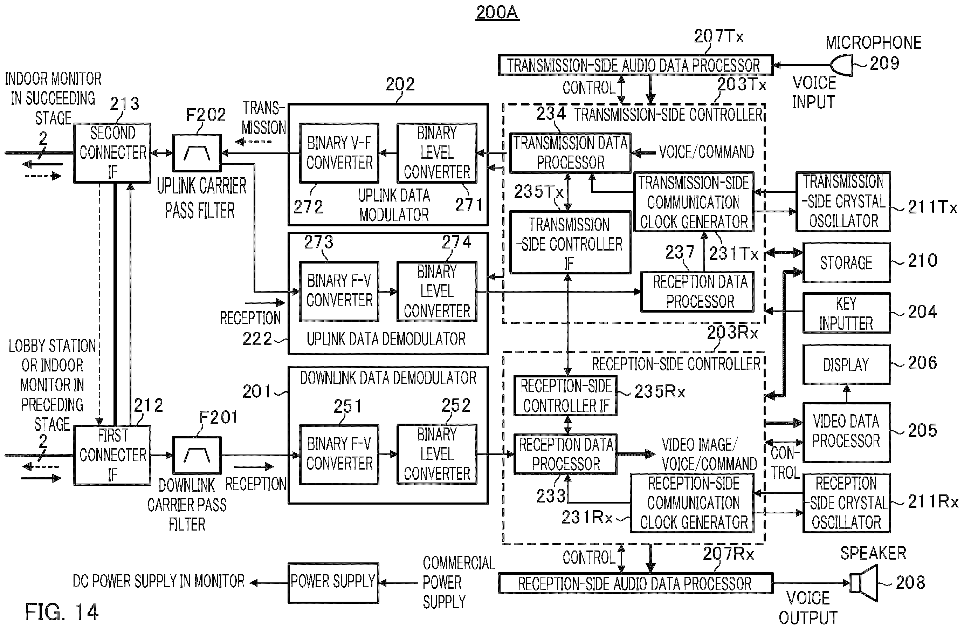

Next, a configuration of indoor monitor 200A of the embodiment will be described with reference to a block diagram of FIG. 14. Note that, in indoor monitor 200A illustrated in FIG. 14, components common to those of indoor monitor 200 illustrated in FIG. 5 are assigned the same reference signs as in FIG. 5 and descriptions thereof will be omitted. In indoor monitor 200A, controller 203 is divided into two of transmission-side controller 203Tx and reception-side controller 203Rx in comparison with indoor monitor 200. Accordingly, audio data processor 207 is divided into transmission-side audio data processor 207Tx and reception-side audio data processor 207Rx. Further, indoor monitor 200A includes two crystal oscillators of transmission-side crystal oscillator 211Tx and reception-side crystal oscillator 211Rx.

Further, indoor monitor 200A includes uplink data demodulator 222 for demodulating crystal oscillation frequency-adjusted data, which outputs reception data having passed through uplink carrier pass filter F202. Uplink data demodulator 222 includes binary F-V converter 273 and binary level converter 274. Note that, only one of uplink data modulator 202 and uplink data demodulator 222 operates by switching by transmission-side controller 203Tx between transmission and reception in units of time slots.

Transmission-side controller 203Tx internally includes transmission-side communication clock generator 231Tx, transmission data processor 234, transmission-side controller IF 235Tx, and reception data processor 237. Reception-side controller 203Rx internally includes reception-side communication clock generator 231Rx, reception data processor 233, and reception-side controller IF 235Rx.

Key inputter 204, transmission-side audio data processor 207Tx, and transmission-side crystal oscillator 211Tx are connected to transmission-side controller 203Tx. Video data processor 205, display 206, reception-side audio data processor 207Rx, and reception-side crystal oscillator 211Rx are connected to reception-side controller 203Rx. Speaker 208 is connected to reception-side audio data processor 207Rx, and microphone 209 is connected to transmission-side audio data processor 207Tx.

Transmission-side audio data processor 207Tx applies analog voice processing such as amplification to analog audio data output from microphone 209, converts the analog audio data into digital audio data, and outputs the digital audio data to transmission-side controller 203Tx. Reception-side audio data processor 207Rx converts digital audio data output from reception-side controller 203Rx into analog audio data, applies processing such as amplification to the analog audio data, and outputs the analog audio data to speaker 208.

Transmission-side communication clock generator 231Tx of transmission-side controller 203Tx generates a downlink communication clock based on an oscillation frequency of transmission-side crystal oscillator 211Tx, and outputs the downlink communication clock to transmission data processor 234.

Transmission-side controller IF 235Tx of transmission-side controller 203Tx connects transmission-side controller 203Tx and reception-side controller 203Rx in a state where a signal can be transmitted.

Reception data processor 237 of transmission-side controller 203Tx outputs the crystal oscillation frequency-adjusted data to transmission-side communication clock generator 231Tx.

Reception-side communication clock generator 231Rx of reception-side controller 203Rx generates a downlink communication clock based on an oscillation frequency of reception-side crystal oscillator 211Rx, and outputs the downlink communication clock to reception data processor 233. Further, reception-side communication clock generator 231Rx controls the oscillation frequency of reception-side crystal oscillator 211Rx based on the transmission-side communication clock of lobby station 100.

Reception-side controller IF 235Rx of reception-side controller 203Rx connects transmission-side controller 203Tx and reception-side controller 203Rx in a state where a signal can be transmitted.

Transmission-side crystal oscillator 211Tx includes a crystal oscillator, and outputs a voltage amplitude signal (frequency signal) of an oscillation frequency to transmission-side communication clock generator 231Tx. Note that, the oscillation frequency of transmission-side crystal oscillator 211Tx is adjusted to a center value by register setting by a microcomputer or the like at the time of factory shipment. Further, each block (see FIG. 8) of transmission-side communication clock generator 231Tx does not operate (is turned off) when the center value adjustment is performed at the time of factory shipment. Further, at the time of normal operation, each block of transmission-side communication clock generator 231Tx always operates (is turned on), and the oscillation frequency of transmission-side crystal oscillator 211Tx is always automatically adjusted. However, in a case where indoor monitor 200 at the end transmits an uplink reference beacon, indoor monitor 200 at the end stops (turns off) operation of each block (see FIG. 8) of uplink data demodulator 222, reception data processor 237, and transmission-side communication clock generator 231Tx, leaves the uplink (low-speed transmission and reception) clock as it is at the time of factory setting or as a value at the time of final adjustment, and no automatic adjustment of the oscillation frequency of crystal oscillator 211 is performed.

Indoor monitors 200A other than the indoor monitor at the end operate uplink data demodulator 222, reception data processor 237, and transmission-side communication clock generator 231Tx at the timing of data reception, and adjust the crystal oscillation frequency of transmission-side crystal oscillator 211Tx. Specifically, when every connected apparatus is in the idle state, indoor monitors 200A other than indoor monitor at the end operate uplink data demodulator 222, receive a communication frame including a reference beacon transmitted from the indoor monitor at the end, perform reception processing of a data string in reception data processor 237, and adjust the crystal oscillation frequency of transmission-side crystal oscillator 211Tx by using the data string in transmission-side communication clock generator 231Tx.

Reception-side crystal oscillator 211Rx includes a crystal oscillator, and outputs a voltage amplitude signal (frequency signal) of an oscillation frequency to reception-side communication clock generator 231Rx. Note that, the oscillation frequency of reception-side crystal oscillator 211Rx is adjusted to a center value by register setting by a microcomputer or the like at the time of factory shipment. Further, each block (see FIG. 8) of reception-side communication clock generator 231Rx does not operate (is turned off) when the center value adjustment is performed at the time of factory shipment. Further, at the time of normal operation, each block of reception-side communication clock generator 231Rx always operates (is turned on), and the oscillation frequency of reception-side crystal oscillator 211Rx is always automatically adjusted.

### <Effects>

As mentioned above, in the embodiment, the blocks on the transmission side and the blocks on the reception side operate at the respective communication clocks in lobby station 100A and indoor monitor 200A, thereby enabling transmission and reception as independent transmission systems for downlink transmission and uplink transmission, respectively.

### (Embodiment 3)

In Embodiment 3, a case of adding an extension call function between indoor monitors will be described. In Embodiment 3, internal configurations of lobby station 100B and indoor monitor 200B are partially changed from those of lobby station 100 and indoor monitor 200 described in Embodiment 1. Note that, since a system configuration of the embodiment is the same as that of FIG. 1 described in Embodiment 1, a description thereof will be omitted.

### <Configuration of Lobby Station>

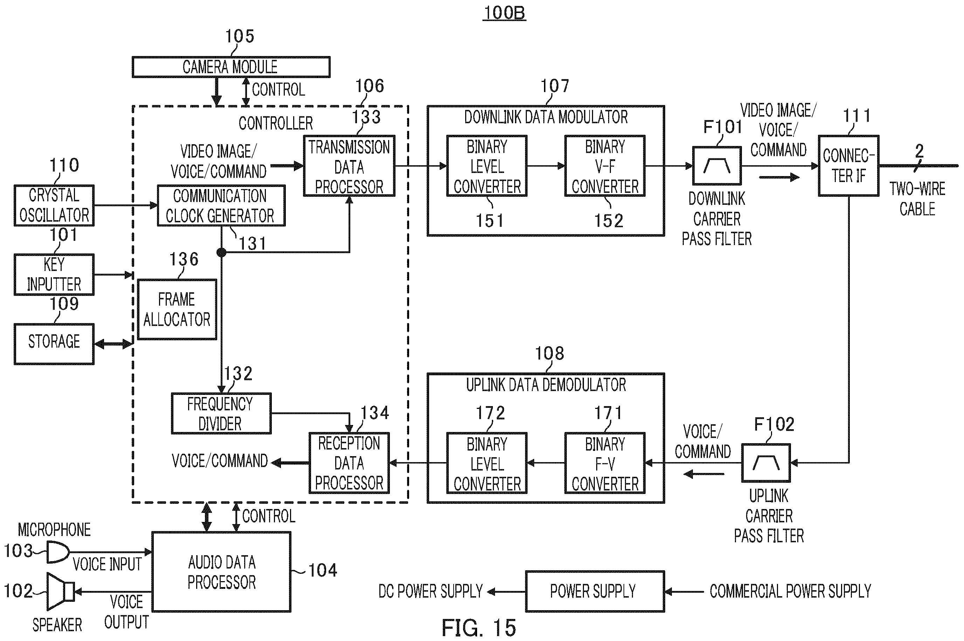

Next, a configuration of lobby station 100B of the embodiment will be described with reference to a block diagram in FIG. 15. Note that, in lobby station 100B illustrated in FIG. 15, components common to those of lobby station 100 illustrated in FIG. 3 are assigned the same reference signs as in FIG. 3 and descriptions thereof will be omitted. In lobby station 100B, frame allocator 136 is added to the inside of controller 106 in comparison with lobby station 100.

In a case where a downlink packet is transmitted to a plurality of indoor monitors 200B, frame allocator 136 allocates a transmission destination of each communication frame. For example, in a case where an extension call is made between indoor monitor 200B-i and indoor monitor 200B-j (where i is a positive integer, and j is a positive integer other than i), frame allocator 136 sets indoor monitor 200B-i as a transmission destination of an n-th communication frame where n mod3 = 0, and sets indoor monitor 200B-j as a transmission destination of an n-th communication frame where n mod3 = 1 (where "n mod3" is a remainder when dividing n by 3). Further, in a case where indoor monitor 200B-i and indoor monitor 200B-j are in a state of making an extension call (hereinafter, referred to as "extension call state") and lobby station 100B communicates with indoor monitor 200B-k (where k is a positive integer other than i and j), frame allocator 136 sets indoor monitor 200-i as the transmission destination of the n-th communication frame where n mod3 = 0, sets indoor monitor 200-j as the transmission destination of the n-th communication frame where n mod3 = 1, and sets indoor monitor 200-k as a transmission destination of an n-th communication frame where n mod3 = 2. Note that, in this case, time slots ("SL1" to "SL18") allocated for transmitting image data of the n-th communication frame where n mod3 = 0 or 1, which are used in the extension call, become free slots. Frame allocator 136 may be utilized to transmit digital video data addressed to indoor monitor 200B-k to the free slots. Thus, it is possible to improve the image quality in the indoor monitor that is the communication opposite party of the lobby station by utilizing free slots for a downlink, that is, high-speed transmission-side, indoor call for transmitting digital video data.

### <Configuration of Indoor Monitor>

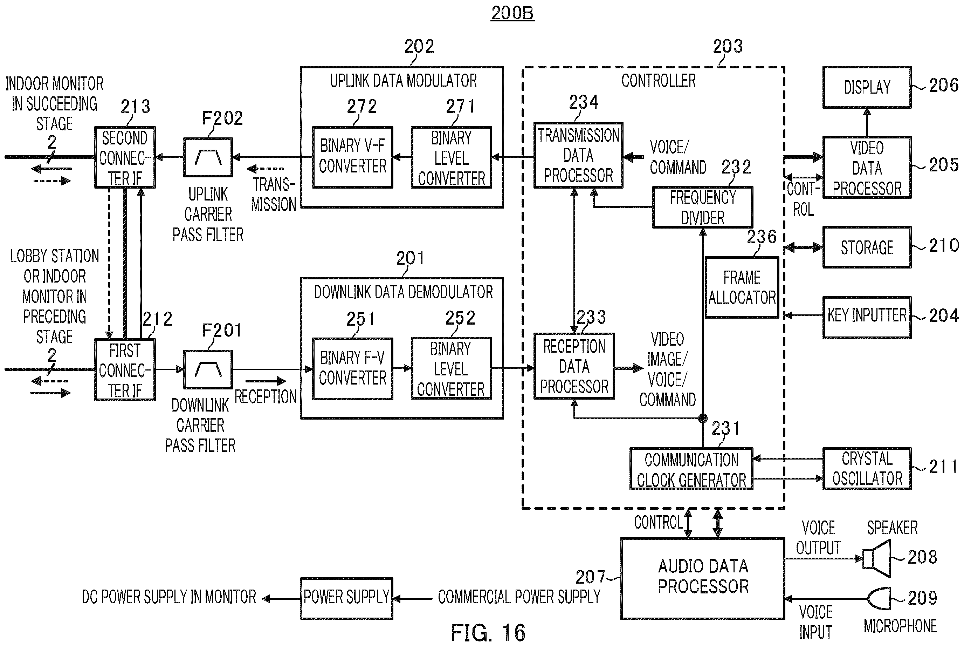

Next, a configuration of indoor monitor 200B of the embodiment will be described with reference to a block diagram of FIG. 16. Note that, in indoor monitor 200B illustrated in FIG. 16, components common to those of indoor monitor 200 illustrated in FIG. 5 are assigned the same reference signs as in FIG. 5 and descriptions thereof will be omitted. In indoor monitor 200B, frame allocator 236 is added to the inside of controller 203 in comparison with indoor monitor 200.

In a case where a plurality of indoor monitors 200B transmit uplink packets, frame allocator 236 allocates communication frames to be used. For example, in a case where an extension call is made between indoor monitor 200B-i and indoor monitor 200B-j, frame allocator 236 of indoor monitor 200B-i uses an n-th communication frame where n mod3 = 0, and frame allocator 236 of indoor monitor 200B-j uses an n-th communication frame where n mod3 = 1. Further, in a case where indoor monitor 200B-i and indoor monitor 200B-j are in the extension call state and lobby station 100B communicates with indoor monitor 200B-k, frame allocator 236 of indoor monitor 200B-i uses the n-th communication frame where n mod3 = 0, frame allocator 236 of indoor monitor 200B-j uses the n-th communication frame where n mod3 = 1, and frame allocator 236 of indoor monitor 200B-k sets indoor monitor 200-k as a transmission destination of an n-th communication frame where n mod3 = 2.

### <Call Sequence>

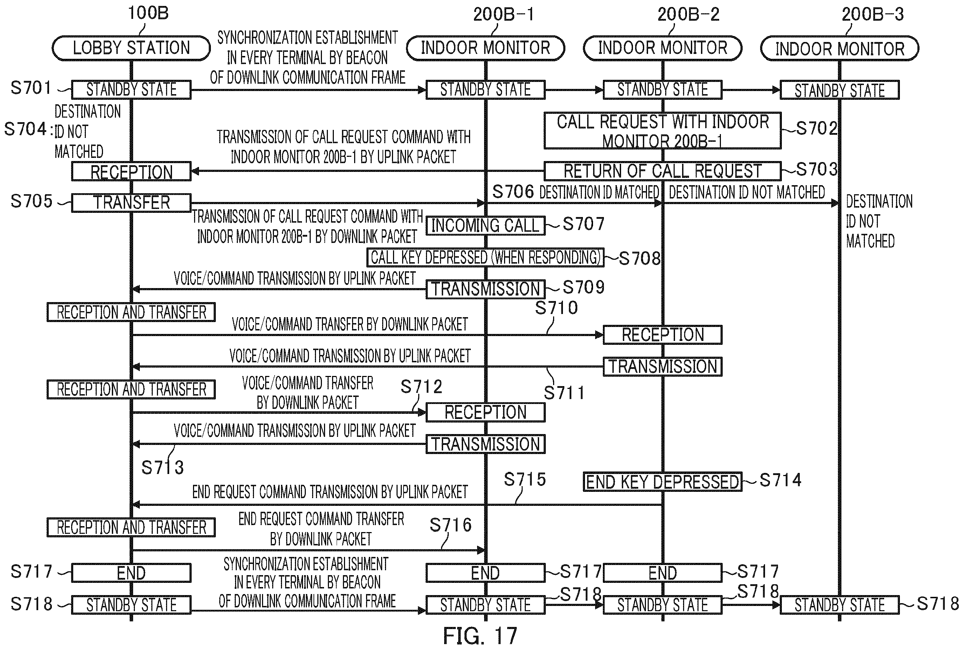

Next, various sequences of door phone system 1 according to the embodiment will be described with reference to FIGS. 17, 18, and 19. Note that, FIGS. 17, 18, and 19 illustrate examples in which one lobby station 100B and three indoor monitors 200B-1, 200B-2, and 200B-3 are connected by daisy chain wiring.

FIG. 17 illustrates a sequence in which indoor monitor 200B-1 and indoor monitor 200B-2 make an extension call. As a precondition, it is assumed that in the standby state (S701), synchronization is established between lobby station 100B and respective indoor monitors 200B-1, 200B-2, and 200B-3 by a beacon of a downlink packet.

In a case where operation to depress a call request button of indoor monitor 200B-2 is performed (S702) in the standby state, indoor monitor 200B-2 transmits an uplink packet in which an ID of indoor monitor 200B-1 is the transmission destination ID and which includes call request command data to lobby station 100B (S703).

Note that, in a case where indoor monitor 200B-3 at the end is in the standby state (S701), it is assumed that synchronization is established between lobby station 100B and respective indoor monitors 200B-1, 200B-2, and 200B-3 by a beacon of a communication frame of an uplink packet transmitted from indoor monitor 200B-3. Indoor monitor 200B-3 being at the end may be set manually at the time of installation, or may be determined by indoor monitor 200B-3 detecting that second connecter IF 213 in the downlink direction is free.

Lobby station 100B determines whether the transmission destination ID of the received uplink packet matches the own ID of lobby station 100B stored in storage 210 (S704).

Since the transmission destination ID of the uplink packet does not match the own ID of lobby station 100B, lobby station 100B transfers the received uplink packet including the call request command data as a downlink packet in which the ID of indoor monitor 200B-1 is the transmission destination ID and an ID of indoor monitor 200B-2 as the transmission source ID (S705). Note that, the communication frame number of the downlink packet is 0.

Each of indoor monitors 200B-1, 200B-2, and 200B-3 determines whether the transmission destination ID of the received downlink packet matches the own IDs of indoor monitors 200B-1, 200B-2, and 200B-3 stored in storage 210 (S706).

Since the transmission destination ID of the downlink packet matches the own ID of indoor monitor 200B-1, indoor monitor 200B-1 performs incoming call processing such as outputting a callout voice from speaker 208 (S707). Note that, indoor monitors 200B-2 and 200B-3 ignore the received downlink packet since the transmission destination ID of the downlink packet does not match the own IDs of indoor monitors 200B-2 and 200B-3.

Then, in a case where operation to depress a call key of indoor monitor 200B-1 is performed (S708), indoor monitor 200B-1 transmits an uplink response packet to lobby station 100B (S709), and lobby station 100B transfers the received uplink response packet by means of a downlink packet in which the ID of indoor monitor 200B-2 is the transmission destination ID and the ID of indoor monitor 200B-1 is the transmission source ID, and which uses an n-th communication frame where n mod3 = 0 (S710). Note that, the communication frame number of the downlink packet is 1. Thus, indoor monitor 200B-1 and indoor monitor 200B-2 come into the extension call state via lobby station 100B.

Indoor monitor 200B-2 transmits an uplink packet in which digital audio data addressed to indoor monitor 200B-1 is written, to lobby station 100B by using an n-th communication frame where n mod3 = 0 (S711). Lobby station 100B transfers the uplink packet received from indoor monitor 200B-2 to indoor monitor 200B-1 by means of a downlink packet using an n-th communication frame where n mod3 = 1 (S712). Indoor monitor 200B-1 transmits an uplink packet in which digital audio data addressed to indoor monitor 200B-2 is written, to lobby station 100B by using an n-th communication frame where n mod3 = 1 (S713).

Then, in a case where operation to depress an end key of indoor monitor 200B-2 is performed (S714), indoor monitor 200B-2 transmits an uplink packet including end request command data to lobby station 100B (S715). When lobby station 100B extracts the end request command data, lobby station 100B transmits a downlink packet including the end request command data to indoor monitor 200B-1 (S716).

Then, indoor monitors 200B-1 and 200B-2 end the extension call (S717), and lobby station 100B and indoor monitors 200B-1 and 200B-2 come into the standby state (S718).

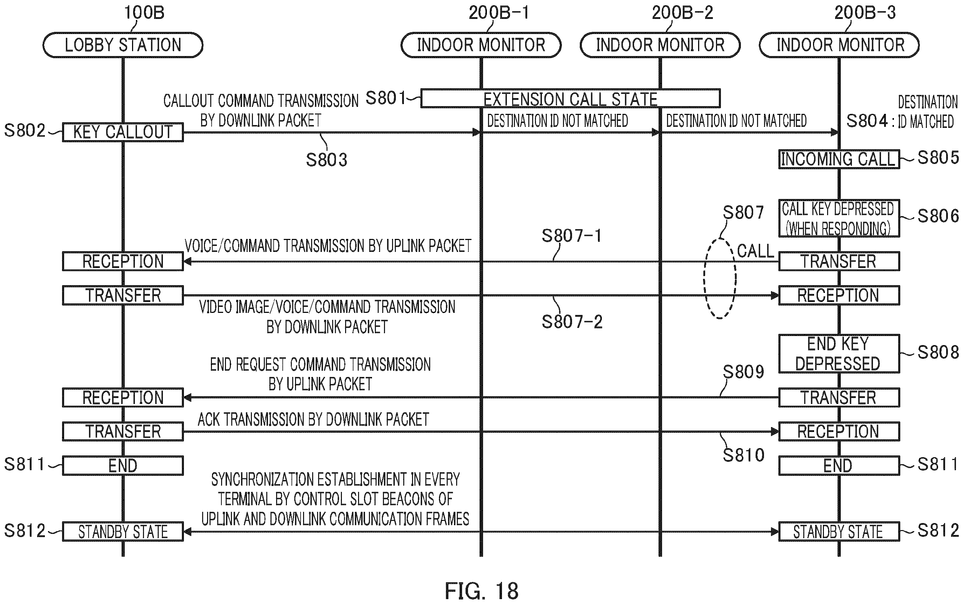

FIG. 18 illustrates a sequence in a case where, when indoor monitors 200B-1 and 200B-2 are in the extension call state, lobby station 100B and indoor monitor 200B-3 come into the call state, which is activated by lobby station 100B. As a precondition, it is assumed that in a case where indoor monitors 200B-1 and 200B-2 are in the extension call state (S710 to S713 in FIG. 17) (S801), synchronization is established between lobby station 100B and respective indoor monitors 200B-1, 200B-2, and 200B-3 by a beacon of a communication frame of a downlink packet from lobby station 100B.

Note that, in a case where indoor monitors 200B-1 and 200B-2 are in the extension call state (S801), it is assumed that synchronization is established between lobby station 100B and respective indoor monitors 200B-1, 200B-2, and 200B-3 by a beacon of a communication frame of an uplink packet transmitted from indoor monitor 200B-3.

In a case where operation to depress a callout button of lobby station 100B is performed (S802) in the extension call state, lobby station 100B transmits a downlink packet in which an ID of indoor monitor 200B-3 is the transmission destination ID and which includes callout command data to every indoor monitor 200B by using an n-th communication frame where n mod3 = 2 (S803).

Each of indoor monitors 200B-1, 200B-2, and 200B-3 determines whether the transmission destination ID of the received downlink packet (time slot) matches the own IDs of indoor monitors 200B-1, 200B-2, and 200B-3 stored in storage 210 (S804).

Since the transmission destination ID of the downlink packet matches the own ID of indoor monitor 200B-3, indoor monitor 200B-3 performs incoming call processing such as outputting a callout voice from speaker 208 (S805). Note that, indoor monitors 200B-1 and 200B-2 ignore the received downlink packet since the transmission destination ID of the downlink packet does not match the own IDs of indoor monitors 200B-1 and 200B-2.

Then, in a case where operation to depress a call key of indoor monitor 200B-3 is performed (S806), indoor monitor 200B-3 responds to lobby station 100B, and lobby station 100B and indoor monitor 200B-3 come into the call state (S807). Note that, as response processing, indoor monitor 20B-3 writes response command data including the transmission source ID (the ID of indoor monitor 200B-3) and the transmission destination ID (the ID of lobby station 100B) in each time slot in an n-th uplink communication frame where n mod3 = 2.

In the call state, lobby station 100B transmits digital video data, digital audio data, and command data to indoor monitor 200B-3 by means of a downlink packet of an n-th communication frame where n mod3 = 2 (S807-2). Further, indoor monitor 200B-3 transmits digital audio data and command data to lobby station 100B by means of an uplink packet of an n-th communication frame where n mod3 = 2 (S807-1). Thus, a call with a video image can be performed between lobby station 100B and indoor monitor 200B-3.

Then, in a case where operation to depress an end key of indoor monitor 200B-3 is performed (S808), indoor monitor 200B-3 transmits an uplink packet including end request command data to lobby station 100B (S809). When lobby station 100B extracts the end request command data, lobby station 100B transmits a downlink packet including ACK (acknowledgement) command data to indoor monitor 200B-3 (S810).

Then, lobby station 100B and indoor monitor 200B-3 end the communication (S811), and indoor monitor 200B-3 comes into the standby state (S812).

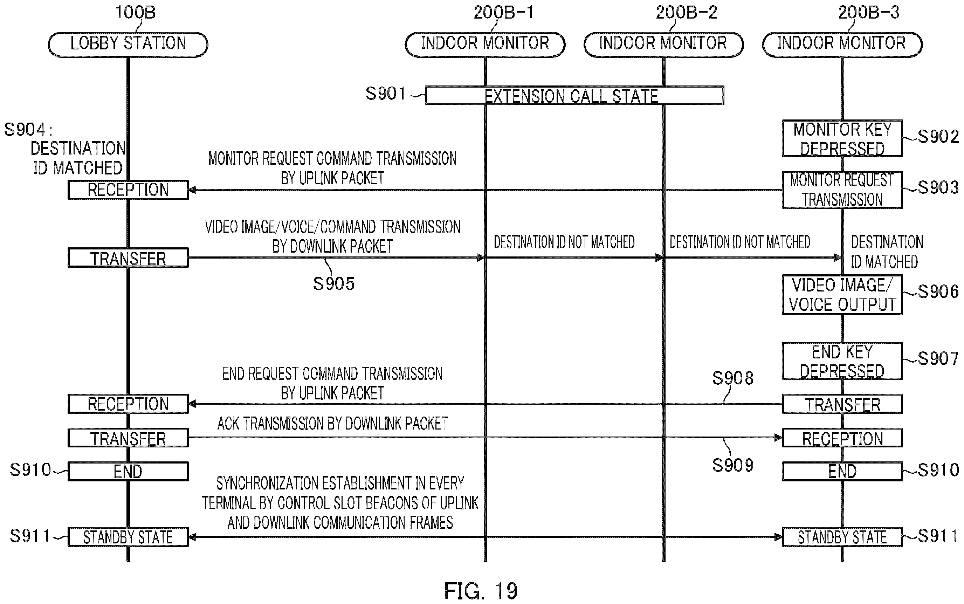

FIG. 19 illustrates a sequence in a case of monitoring an image of lobby station 100B, which is activated by indoor monitor 200B-3 when room monitors 200B-1 and 200B-2 are in the extension call state. In a case where indoor monitors 200B-1 and 200B-2 are in the extension call state (S710 to S713 in FIG. 17) (S901), it is assumed that synchronization is established between lobby station 100B and respective indoor monitors 200B-1, 200B-2, and 200B-3 by a beacon of a communication frame of a downlink packet from lobby station 100B.

Note that, in a case where indoor monitors 200B-1 and 200B-2 are in the extension call state (S901), it is assumed that synchronization is established between lobby station 100B and respective indoor monitors 200B-1, 200B-2, and 200B-3 by a beacon of a communication frame of an uplink packet transmitted from indoor monitor 200B-3.

In a case where operation to depress a monitor key of indoor monitor 200B-3 is performed (S902) in the extension call state, indoor monitor 200B-3 transmits an uplink packet in which the ID of lobby station 100B is the transmission destination ID and which includes monitor request command data to lobby station 100B by using an n-th communication frame where n mod3 = 2 (S903).

Lobby station 100B determines whether the transmission destination ID of the received uplink packet matches the own ID of lobby station 100B stored in storage 109 (S904).

Since the transmission destination ID of the uplink packet matches the own ID of lobby station 100B, lobby station 100B transmits a downlink packet of an n-th communication frame where n mod3 = 2, in which the ID of indoor monitor 200B-3 is the transmission destination ID and which includes digital video data, digital audio data, and command data, to indoor monitor 200B-3 (S905).

Since the transmission destination ID of the downlink packet matches the own ID of indoor monitor 200B-3, indoor monitor 200B-3 outputs a video image and voice. Thus, it is possible for a user of indoor monitor 200B-3 to monitor the image of lobby station 100B (S906). Note that, since the transmission destination ID of the downlink packet does not match the own IDs of indoor monitors 200B-1 and 200B-2, indoor monitors 200B-1 and 200B-2 ignore the received downlink packet.

Then, in a case where the operation to depress the end key of indoor monitor 200B-3 is performed (S907), indoor monitor 200B-3 transmits an uplink packet including end request command data to lobby station 100B (S908). When lobby station 100B extracts the end request command data, lobby station 100B transmits a downlink packet including ACK (acknowledgement) command data to indoor monitor 200B-3 (S909).

Then, lobby station 100B and indoor monitor 200B-3 end the communication (S910), and indoor monitor 200B-3 comes into the standby state (S911).

### <Effects>

As mentioned above, in the embodiment, it is possible to make a full-duplex extension call between indoor monitors via the lobby station. Further, in the embodiment, when an extension call is being made between the indoor monitors, it is possible to implement a call with a video image between another indoor monitor and the lobby station.

Further, according to the embodiment, when there is a call from the lobby station to one of indoor monitors which make an extension call, it is also possible to notify the indoor monitor of the call from the lobby station (notification by monitor display, voice output, or the like) so that a resident of the indoor monitor can respond to the call from the lobby station by switching between the calls.

Note that, the present disclosure is not limited to the above embodiments regarding types, arrangement, numbers and the like of the members, and can be changed accordingly within a range not departing from the scope of the present invention such as appropriately replacing its constituent elements with ones having similar functional effects.

For example, in door phone system 1 of the present disclosure, the number of indoor monitors 200 is not particularly limited.

Further, in the above description, the case of using FSK modulation as the digital modulation system is described, but the present disclosure is not limited to this, and other digital modulation such as ASK modulation and PSK modulation may be used. In the case of using ASK modulation, for example, the first carrier frequency is made 13 MHz, the second carrier frequency is not modulated, and the first carrier frequency is made within the range of the frequency band used for transmission and reception of the analog video data. Further, in the case of using PSK modulation, for example, one carrier frequency is used, the carrier wave is modulated so that the H level and the L level of a digital data string have phases different from each other, and the carrier frequency is made within the range of the frequency band used for transmission and reception of the analog video data.

### Industrial Applicability

The present disclosure is suitable for use in door phone systems for multiple dwelling houses.

### Reference Signs List

1 Door phone system
100, 100A, 100B Lobby station
101, 204 Key inputter
102, 208 Speaker
103, 209 Microphone
104, 207 Audio data processor
104Tx, 207Tx Transmission-side audio data processor
104Rx, 207Rx Reception-side audio data processor
105 Camera module
106, 203 Controller
106Tx, 203Tx Transmission-side controller
106Rx, 203Rx Reception-side controller
107 Downlink data modulator
108 Uplink data demodulator
109, 210 Storage
110, 211 Crystal oscillator
110Tx, 211Tx transmission-side crystal oscillator
110Rx, 211Rx Reception-side crystal oscillator
111 Connecter IF
131, 231 Communication clock generator
131Tx, 231Tx Transmission-side communication clock generator
131Rx, 231Rx Reception-side communication clock generator
132, 232 Frequency divider
133, 234 Transmission data processor
134, 233, 237 Reception data processor
135Tx, 235Tx Transmission-side controller IF
135Rx, 235Rx Reception-side controller IF
136, 236 Frame allocator
151, 172, 252, 271, 274 Binary level converter
152, 272 Binary V-F converter
171, 251, 273 Binary F-V converter
200, 200A, 200B Indoor monitor
201 Downlink data demodulator
202 Uplink data modulator
205 Video data processor
206 Display
222 Uplink data demodulator

## Claims

1. A door phone system comprising:
a lobby station; and
an indoor monitor that communicates with the lobby station, wherein
the lobby station performs digital modulation on a digital data string of a downlink packet including digital video data and digital audio data, and transmits a downlink carrier with a modulation signal thereon within a first frequency band to the indoor monitor, and
the indoor monitor performs digital modulation on a digital data string of an uplink packet including digital audio data, and transmits an uplink carrier with a modulation signal thereon within a second frequency band lower than the first frequency band to the lobby station.

2. The door phone system according to claim 1, wherein
the lobby station performs frequency shift keying (FSK) modulation on the digital data string of the downlink packet, and
the indoor monitor performs FSK modulation on the digital data string of the uplink packet.

3. The door phone system according to claim 1, wherein
the lobby station performs amplitude shift keying (ASK) modulation on the digital data string of the downlink packet, and
the indoor monitor performs ASK modulation on the digital data string of the uplink packet.

4. The door phone system according to claim 1, wherein
the lobby station performs phase shift keying (PSK) modulation on the digital data string of the downlink packet, and
the indoor monitor performs PSK modulation on the digital data string of the uplink packet.

5. The door phone system according to any one of claims 1 to 4, wherein
a plurality of the indoor monitors are connected,
one of the plurality of indoor monitors performs digital modulation on a digital data string of an uplink packet including a message for simultaneous transmission, and transmits an uplink carrier with a modulation signal thereon within the second frequency band to the lobby station,
the lobby station performs digital modulation on a digital data string of a downlink packet including the message for simultaneous transmission, and transmits a downlink carrier with a modulation signal thereon within the first frequency band to all of the plurality of indoor monitors, and
each of the plurality of indoor monitors displays an image of the message or outputs voice of the message.

6. The door phone system according to any one of claims 1 to 5, wherein
the lobby station allocates at least one time slot of a communication frame composed of a plurality of time slots for the digital video data, and allocates at least one time slot for the digital audio data.

7. A communication method of a door phone system including: a lobby station; and an indoor monitor that communicates with the lobby station, the communication method comprising:
performing, by the lobby station, digital modulation on a digital data string of a downlink packet including digital video data and digital audio data;
transmitting, by the lobby station, a downlink carrier with a modulation signal thereon within a first frequency band to the indoor monitor;
performing, by the indoor monitor, digital modulation on a digital data string of an uplink packet including digital audio data; and
transmitting, by the indoor monitor, an uplink carrier with a modulation signal thereon within a second frequency band lower than the first frequency band to the lobby station.
